# EUROPEAN PATENT SPECIFICATION

(11) **EP 4 641 492 B1**
(45) Date of publication and mention of the grant of the patent: **02.09.2026**
(21) Application number: 22969063.1
(22) Date of filing: 29.12.2022
(51) Int. Cl.: G06T 7/10, G06N 3/04, G06N 3/045, G06N 3/0455, G06N 3/0464, G06N 3/048, G06N 3/08, G06N 3/082, G06N 3/084, G06N 3/09, G06V 10/82, G06V 20/64, G06V 10/44, G06T 7/11

(54) **THREE-DIMENSIONAL LIDAR POINT CLOUD SEMANTIC SEGMENTATION METHOD AND APPARATUS BASED ON DEEP LEARNING**
VERFAHREN UND VORRICHTUNG ZUR SEMANTISCHEN SEGMENTIERUNG EINER DREIDIMENSIONALEN LIDAR-PUNKTWOLKE AUF DER BASIS VON TIEFENLERNEN
PROCÉDÉ ET APPAREIL DE SEGMENTATION SÉMANTIQUE DE NUAGE DE POINTS LIDAR TRIDIMENSIONNEL BASÉS SUR UN APPRENTISSAGE PROFOND

(30) Priority: 22.12.2022 CN 202211659267
(43) Date of publication of application: 29.10.2025
(73) Proprietor: Zhejiang Lab, Hangzhou, Zhejiang 310023 (CN)
(72) Inventor: CHEN, Hongyang, Hangzhou, Zhejiang 310023 (CN); HE, Jiahua, Hangzhou, Zhejiang 310023 (CN); LI, Chao, Hangzhou, Zhejiang 310023 (CN)
(74) Representative: karo IP
(86) International application number: PCT/CN2022/143376
(87) International publication number: WO 2024/130776

(56) References cited:
- CN-A- 108 415 032
- CN-A- 110 570 429
- CN-A- 115 035 404
- CN-A- 115 035 404
- CN-A- 115 421 158

## Description

### TECHNICAL FIELD

The present disclosure relates to the technical field of computer vision, and more particularly, to a deep learning and lidar point cloud semantic segmentation method and apparatus, a device, and a medium, which are used for three-dimensional point cloud high-precision real-time semantic segmentation in an outdoor large-scale scene.

### BACKGROUND

In a perception technology of an unmanned vehicle environment, a vehicle-mounted lidar achieves 360-degree full-coverage capture of object information in an environment in a large-scale scene by means of extremely high angle and distance resolution, and generates a large amount of high-precision three-dimensional point clouds. As a basic technology in three-dimensional point cloud processing, the semantic segmentation technology is a basis of various applications such as three-dimensional scene reconstruction, scene understanding and target detection, and is a research hotspot in the field of intelligent agent environment perception, and is of interest to vast researchers.

In recent years, deep learning has been greatly successful in the field of computer vision such as target recognition, detection, and semantic segmentation, and many deep learning-based outdoor large-scale scene three-dimensional point cloud semantic segmentation algorithms are continuously proposed.

The semantic segmentation method directly processes raw point clouds in their original disordered set form so that complete feature information can be retained, but due to the problems of irregular memory access, neighborhood search and the like caused by disorder in the operation process, the operation efficiency is extremely low, the method is only suitable for indoor scenes with high precision requirements and low real-time performance requirements, and is not suitable for large-scale road scenes with high real-time requirements.

Based on a voxel representation-based semantic segmentation method such as kd-Net, Msnet is converted into a single voxel feature by using the average feature of the original point cloud, so as to construct a three-dimensional voxelized point cloud grid similar to the two-dimensional pixel graph, and by constructing a calculation graph, the calculation and memory resources are adaptively allocated according to the density of the point cloud, and the point cloud space is effectively divided, and the division result is a layer-by-layer extraction feature from bottom to top. Due to the lower correlation between the channels, the segmentation precision is not high. At the same time, the resolution of the receptive field of this type is relatively large, while the high-resolution voxel retains more information, but its calculation cost and memory consumption are very high, and it is difficult to perform model training based on the high-resolution voxel; and a low-resolution voxel can lose more information, resulting in a quantization error.

Documents CN115035404A and CN110570429A disclose methods for the semantic segmentation of point clouds. They propose to project features of the point cloud into a 2-dimensional space. A convolutional neural network then performs the segmentation on the projected points.

In summary, these methods still have problems such as slow operation speed and low estimation precision in an actual application process; meanwhile, most of the storage and performance of the vehicle-mounted computing device cannot support the complex structure and the huge operand thereof, so that the requirement of real-time semantic segmentation of the outdoor large-scale scene cannot be met.

### SUMMARY OF THE INVENTION

The present invention provides a three-dimensional laser radar point cloud semantic segmentation method and device based on deep learning to overcome the defects in the prior art, and can realize more efficient and accurate semantic segmentation of an outdoor large-scale scene;

The present invention provides a three-dimensional laser radar point cloud semantic segmentation method based on deep learning, comprising the following steps:
step 1: constructing a lightweight deep fully convolutional neural network; constructing a fully convolutional neural network for training composed of three parts, namely, an encoder, a decoder, and a classifier;
step 2: performing feature transformation on the original point cloud of the laser radar; obtaining an original three-dimensional point cloud data set from the laser radar, and performing dimension reduction to form four feature dimensions after feature transformation and splicing;
step 3: converting the three-dimensional spatial feature into a two-dimensional spatial feature, and preprocessing the two-dimensional spatial feature; generating a structured four-channel distance feature map from the disordered feature in a spherical projection manner, generating a single-channel two-dimensional semantic image from the sequence label, converting the single-channel two-dimensional semantic image into a format matching the format required by the preprocessed data; preprocessing the data, and dividing the preprocessed data sample into a training set and a test set;
step 4: training a lightweight deep fully convolutional neural network; using the point cloud feature map in the training set as a training sample, taking the point cloud semantic map as a real value label, training a deep full convolutional semantic segmentation neural network by using a back propagation and random gradient descent method, and finally obtaining an optimized model parameter by minimizing a loss function;
step 5: performing semantic segmentation on the two-dimensional point cloud; inputting the original point cloud into a two-dimensional semantic segmentation framework to obtain a two-dimensional spatial semantic label;
step 6: performing post-processing optimization on the two-dimensional semantic label; using a sliding window voting mechanism based on a two-dimensional matrix and using the characteristics of consistency of internal point cloud density and invariance of rotation and translation of a single object, and performing global correction on mislabeling caused by low data volume of a single category of point cloud frames, and sparse point clouds due to long-distance sampling , and fuzzy semantic boundary;
Step 7: recovering the three-dimensional semantic label; reflecting the label result after the two-dimensional semantic segmentation back into the original three-dimensional point cloud semantic space to obtain complete point cloud frames with three-dimensional semantic label.

Further, the lightweight deep fully convolutional network described in step 1 includes an input layer, a CSPDarkNet encoder implementing Cross Stage Partial network strategy (CSP) and a residual structure, a decoder based on deconvolution structure, and a classifier for pixel-by-pixel classification, constituting a point cloud segmentation network, abbreviated as CSPRangeNet ; The input is a pre-processed multi-channel two-dimensional point cloud distance image, and the output is a two-dimensional semantic label corresponding to each pixel of the distance image.

The input layer is composed of a convolutional layer-a batch normalization layer-a Mish activation function layer (Conv-Bn-M). The Mish activation function is shown in the following formula (1-3):
$Mish \left(x\right) = x \times tanh \left(ξ\left(x\right)\right)$ $tanh \left(x\right) = \frac{{e}^{x} - {e}^{- x}}{{e}^{x} + {e}^{- x}}$ $ξ \left(x\right) = log \left(1+{e}^{x}\right)$
where x is the feature map of the input, tanh(x) is the hyperbolic tangent function, and ξ(x) is an exponential function with base e. The size of the convolution kernel in the convolution layer is 1×1, the number is 32, and the step size is 1×1. The input data is a distance feature map of size C×H×W after feature transformation and preprocessing, where C is the number of feature channels, here 4, H is the number of laser beams in the vertical direction of the LIDAR, and W is the size of the horizontal angular resolution of the distance feature map.

The encoder is CsPDarkNet, consists of a cross-stage feature fusion layer and a residual network, and is divided into five sub-encoders, each sub-encoder being composed of a down-sampling layer (DS), a cross-stage feature fusion residual layer (CSP-RES) and a random dropout layer (D), wherein each down-sampling layer is composed of a convolutional layer-batch normalization layer-Mish activation function layer (C (3 * 3/2)-BN-M), the size of convolution kernels is 3 × 3, the step length is 1 × 2, the number of down-sampling layers in the five sub-encoder are [64,128,256,512,1024] in turn, and after passing through the down - sampling layer, the distance feature map remains unchanged in the H dimension, and is reduced by half in the W dimension, and is increased by one time in C dimension, thereby accelerating the subsequent feature extraction operation speed ; The feature extraction structure of each sub-encoder is composed of a cross-stage feature fusion residual layer (CSP-Res), the difference is the number of residual blocks which are [1, 2, 8, 8, 4] respectively in sequence in the five sub-encoders, and the cross-stage feature fusion residual layers of the five sub-encoders composed of are [CSP-Res 1, CSP-Res 2, CSP-Res 8, CSP-Res 8, CSP-Res 4] in sequence which allow the extraction of deep features from the down-sampled feature map; The random dropout layer (D) randomly inactivates the extracted deep feature map by using the probability P.

The CSPDarknet encoder including five CSP-Res module structures, is a cross-stage feature fusion layer (Partial Transition Layer) , is a hierarchical feature fusion mechanism, adopts the idea of pre-fusion and post-fusion, adopts a gradient flow truncation strategy, maximizes the difference of gradient combination to prevent residual networks and other convolution layers from learning repeated gradient information, and the learning ability of the network is theoretically improved. The specific steps are as follows:
(11) inputting a 2C * H * W feature mapg through a left branch convolutional layer (C (C * 1 * 1)), wherein the convolution kernel size is 1 × 1, the step length is 1 × 1, and the number is C, to obtain a C * H * W feature map;
(12) inputting a feature map of 2C * H * W\ throuth a right branch depth feature extraction layer including two convolutional layers (C (C * 1 * 1)) and one stacked residual network (Res * N), and the specific process is as follows:
   (2a) inputting the feature map of 2C * H * W into the first layer of a convolutional layer C (C * 1 * 1)), wherein the size of the convolution kernel is 1 × 1, the step size is 1 × 1, and the number of that is C.
   (2b) inputting the result of step (2a) into a second layer of a residual network structure (Res * N), where there are N residual blocks stacked on the layer. The specific calculation process of each residual block is as follows:
      (2b-1) inputting the result of step (2a) into the first convolutional layer (C * 1 * 1) of the residual block, wherein the size of the convolution kernel is 1 × 1, the step size is 1 × 1, and the number of that is C.
      (2b-2) inputting the result of step (2 b-1) into the second convolutional layer (C * 3 * 3) of the residual block, wherein the size of the convolution kernel is 3 × 3, the step size is 1 × 1, and the number of that is C.
      (2b-3) adding the result of step (2b-2) to the result of step (2a).
      (2b-4) inputting the result of step (2b-3) into the subsequent N - 1 residual blocks for continuous operation.
(13) splicing the result of step (2b-4) with the result of step (11) on the first channel (Cat);
(14) inputting the result of step (13) into the last convolution layer (C (2C * 1 * 1)) to perform feature fusion, wherein the convolution kernel size is 1 × 1, the step size is 1 × 1, the number of that is 2C, and the final output feature map size is 2C * H * W

The decoder is composed of five sub-decoders, and each sub-decoder is composed of an up-sampling module (US) and a residual block (Res). Wherein, the up-sampling module is an transposed convolution layer (ConvTransposed2d(4*4/2)), the size of the convolution kernel is 4 × 4, the step length of that is 2, and the number of that of the five sub-decoders is [1024, 512, 256, 128, 64] in sequence, which upsamples the feature extracted by the backbone encoder, i.e., rises 32 times in the W-dimension to restore to the original feature map resolution H × W, and followed closely by a residual block (Res) to improve the result; ; At the same time, after each up-sampling, a jump connection is added between the outputs of different resolutions of the encoder, that is, the output of the decoder is added to the output of the corresponding encoder to recover some high-frequency edge information lost in the down-sampling process; and in the last sub-decoder, arandom dropout layer (D)is added, and the shallow feature map after five times of decoding is randomly inactivated by using the probability P, where P is 0.05.

The classifier part is composed of a convolutional layer (Conv(N*3*3/1)) and an exponential normalization layer (Softmax). The convolution kernel size of the convolution layer is 3 × 3, the step length of that is 1, and the number of that is N, wherein N is the number of two-dimensional semantic tags; dim = 0 in the exponential normalization layer (Softmax), that is, normalization processing is performed on the first dimension, and a probability distribution of the two-dimensional semantic category is output on each pixel point.

The original point cloud feature transformation described in step 2 generates a four-dimensional feature (Ψ , θ , d , r)by means of coordinate system transformation as a new feature, and the specific operation steps are as follows:
(21) Parse the lidar data to obtain an original lidar point cloud frame, where each frame size is n × 4, where n is a quantity of point clouds in each frame, 4 is a feature dimension of each point, that is, [x, y, z, r], where (x,y,z) is a spatial position representation of the point cloud in a three-dimensional Cartesian coordinate system, and R is a reflection intensity of a surface material of an object where the point cloud is located.
(22) The (x, y, z) in the original lidar point cloud frame is transformed by the polar coordinate system to obtain the spatial position representation (Ψ , θ , d) in the polar coordinate system, where Ψ is the horizontal deflection angle in the polar coordinate system, θ is the vertical deflection angle in the polar coordinate system, and d is the distance from the point to the origin of the coordinate system. The polar coordinate system is transformed as shown in the following formula (4-6):
   $d = \sqrt{{x}^{2} + {y}^{2} + {z}^{2}}$
   $θ = {cos}^{- 1} \frac{z}{\sqrt{{x}^{2} + {y}^{2} + {z}^{2}}}$
   $φ = {tan}^{- 1} \frac{y}{x}$
   combining the obtained (Ψ , θ , d) with r to replace the original four-dimensional feature to obtain a new four-dimensional feature (Ψ , θ , d , r);
   where Ψ is the pitch angle of the point cloud in the polar coordinate system, θ is the deflection angle of the point cloud in the polar coordinate system, d is the distance feature from the point cloud to the origin of the radar coordinate system, and after the feature transformation, a quadruple feature is formed, that is, (Ψ, θ, d, r), and r is the reflection intensity of the surface material of the object where the point cloud is located.

The three-dimensional space feature in step 3 is converted into a two-dimensional spatial feature to generate a structured four-channel distance feature map, and the main steps are as follows:
(31) The (h, w) index pair of each point is obtained by using the spatial position feature (x, y, z) of the Cartesian coordinate system of each point in combination with the parameters of the vehicle-mounted laser radar, h is the column index of the distance image, and w is the distance image row index; and the spherical projection is shown in the following formula (7-9):
   $f = {f}_{down} + {f}_{up}$
   $h = \left⌊H\left(1-\left(\frac{π}{2}-θ+{f}_{down}\right)/f\right)\right⌋$
   $w = \left⌊W\left(\frac{1}{2}-φ/2π\right)\right⌋$
   where f is the range of the vertical field of view of the laser radar, f_{down} is the lower limit of the vertical field of view of the laser radar, fᵤₚ is the upper limit of the vertical field of view of the laser radar, H is the vertical resolution of the distance feature map, and is generally a laser radar beam, W is the horizontal resolution of the distance feature map,
   $\left⌊.\right⌋$ is the rounding down function, the quadruple features and (h, w) of all point clouds of the single frame obtained in step 2 are sorted in a descending order according to the value of the feature d; the rearranged quadruple features are respectively mapped to the corresponding two-dimensional distance feature maps through (h, w), and the feature maps are spliced and standardized to obtain a distance feature map with a size of [4 × H × W], where H is the vertical resolution of the distance feature map, and W is the horizontal resolution of the distance feature map;
(32) A final feature map is obtained by using a standardized processing manner for a distance feature map with a size of 4 × H × W. The standardization processing process is shown in the following formula (10):
   ${x}_{i} = \frac{{x}_{i} - {μ}_{i}}{{σ}_{i}}$
   where xᵢ is a feature value of the feature map on each feature channel, µᵢ is a feature mean value on the corresponding feature channel, and σᵢ is a feature variance on the corresponding feature channel; and the method performs standardization processing on each feature channel to obtain a standardized four-channel distance feature map.
(33) Apply the (h, w)index pair obtained in the step (31), and use the label mapping table for the original discontinuous three-dimensional semantic label, firstly generate a continuity label through label mapping , and then maps the continuity label to the two-dimensional image through (h, w), to obtain a single-channel two-dimensional semantic image with a size of H × W. In order to distinguish various categories in the data annotation process,, the real label index is discontinuous, and the subsequent semantic reasoning stage needs continuous real labels; meanwhile, for some scenes, the individual semantic category scene will not appear, and if the model learns the features of such labels, it is easy to interfere with the model, and the model must be prevented from over-learning the interference category information. Therefore, such labels need to be mapped with existing labels to implement label merging and continuity; the label merging process is expressed as follows:
   ${label}_{mapped} ← index \left[{label}_{origin}\right]$
   label_{mapped} is a mapped label, label_{origin} is an original label, and Index is a mapping relationship dictionary. The input is as follows: 1 × N original point cloud label label_{origin}, where N is the number of point clouds; the number of categories n_{class}; and the mapping relationship dictionary in the following form:
      $map_dict : key ∈ \left(0,max\left({origin}_{label}\right), value∈\left(0, {n}_{class}\right.\right)$
   where map_dict is the mapping dictionary, key is the key of the dictionary, value is the value of the dictionary, origin_{labell} is the original label index value, and max() is the maximum value function. The final output result is obtained as the mapped single-channel two-dimensional semantic graph label_{mapped}.

In the process of training the lightweight full convolutional neural network in step 4, the loss function uses the weight cross entropy loss combined with the model structure loss; and in random gradient descent, a preheating learning rate mechanism is used to dynamically adjust the learning rate, thereby improving convergence efficiency and accuracy. The loss function is as formulas (11-14):
$L 1 = - {\sum }_{c = 0}^{N} {w}_{c} {y}_{c} log \left(\hat{{y}_{c}}\right)$
${w}_{c} = \left\{\begin{matrix}0 , & c = 0 \\ \frac{1}{{f}_{c} + ϵ} , & other\end{matrix}\right.$
$L 2 = \frac{α}{2} {\left‖w\right‖}_{2}^{2}$
$loss = L 1 + L 2$

Wherein, 1 is the weight cross entropy loss, C is the category label, *w_{c}* is the weight of the category C, N is the number of category labels,
$\hat{{y}_{c}}$ is a probability estimation value of C of the label after the training set sample is subjected to model reasoning, and *y_{c}* is a true probability value of C labeled by the above samples; *f_{c}* is the proportion of samples of category C in the total samples, and *ε* is a bias amount;
2 is a structure loss of the bit model, α is a proportionality coefficient of the loss, w is a one-dimensional vector composed of all parameters of the model,
${\left‖⋅\right‖}_{2}^{2}$ is a two-norm; Loss is the total loss of the model.

The two-dimensional point cloud semantic segmentation described in step 5 is as follows: after the original point cloud is preprocessed in steps 2, 3 and 4, the original point cloud is input into a lightweight deep fully convolutional neural network for point-by-point reasoning, so as to obtain a two-dimensional spatial semantic label.

In the two-dimensional matrix-based sliding window voting mechanism described in step 6, a pixel point in the domain range is determined according to the distance threshold for each pixel point in the two-dimensional semantic label image obtained in step 5, voting is performed according to the label, and global correction is performed on the two-dimensional semantic label; since the operation on each point in the two-dimensional matrix is independent, a graphics processing unit (GPU) may be used for parallel calculation to accelerate the operation process.

In step 7, the three-dimensional semantic label is recovered, the label reflecting table is used, the optimized two-dimensional semantic label obtained in step 6 is reflected back to the three-dimensional semantic space, and finally a complete point cloud frame with a three-dimensional semantic label is obtained.

A three-dimensional laser radar point cloud semantic segmentation apparatus based on deep learning includes:
an obtaining module, configured to obtain original point cloud data; and
an input module, configured to pre-process the original point cloud data, and extract a pre-processed feature of each point in the point cloud data through a first convolutional layer; and
an encoding module, configured to perform feature extraction and downsampling on an input point cloud feature by using a preset number of encoding layers to obtain an intermediate feature map corresponding to each layer of encoding layer, where the encoding layer includes a downsampling module, a cross-stage feature fusion residual module, and a random deactivation module;
a decoding module, configured to perform feature decoding and upsampling on the intermediate feature mapping by using a preset number of decoding layers to obtain up-sampling feature mapping corresponding to each layer of decoding layer, where the decoding layer includes an up-sampling module and a residual module;
a classification module, configured to perform global summarization on intermediate feature maps generated by the decoding layer, and perform point-by-point two-dimensional semantic classification by using global features; and
a mapping module, configured to map the two-dimensional semantic tags generated by the classification module back to a three-dimensional space to generate a three-dimensional semantic tag;
an output module, configured to summarize the point-by-point three-dimensional semantic labels output by the mapping module according to the frames, and output three-dimensional semantic frames;
An electronic device and a medium, including: a laser radar, a processor, a removable storage medium, a communication part, a vehicle-mounted computing cluster, a memory, and a computer program stored in the memory, wherein the laser radar is a rotary laser radar, and the horizontal field of view range is 360° ; The processor executes the program to implement the three-dimensional laser radar point cloud semantic segmentation method based on deep learning according to any one of claims 1-9, wherein the vehicle-mounted computing cluster is a graphics processing unit (GPU) cluster, to implement the training and reasoning process according to any one of claims 6-9.

The following external electronic device and medium are connected to an input/output (IO) interface: including a solid state, a semi-solid state, a mechanical rotating laser radar, which can capture information in an environment to generate original point cloud data as a subsequent model input; A communication portion of a network interface card, such as a LAN card, a modem, etc. may perform communication processing via a network such as the Internet; a removable storage medium such as a magnetic disk, an optical disk, a magneto-optical disk, a semiconductor memory, etc. reads the computer program stored therein from the I/O port as needed or writes to it a semantic segmentation result data frame to be persisted;
The following internal electronic devices and mediums include: a central processing unit (CPU), which can execute various instructions and actions according to a program stored in a read-only memory (ROM) and loaded into a random access memory (RAM) ; In the RAM, various programs and data required for the operation of the device are also stored; the vehicle-mounted computing cluster is responsible for receiving instructions from the CPU and data from the ROM, and performing large-scale data parallel computing, in particular, the vehicle-mounted graphics processing unit cluster (GPU) is connected through a computer internal high-speed bus (PCI-E); and the CPU, the vehicle-mounted computing cluster, the ROM and the RAM are connected to each other through a bus. The I/O interface is also connected to the bus.

The present disclosure further includes a storage medium, which may be a storage medium included in the electronic device and the medium described above; or may be a storage medium that exists separately and is not assembled into the device. The storage medium stores one or more programs, and the program is used by one or more processors to execute the three-dimensional laser radar point cloud semantic segmentation method based on deep learning of the present disclosure. It includes permanent and non-permanent, removable and non-removable media that can implement information storage by any method or technology. The information may be computer instructions, program modules or raw data, result data, and other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, or other optical storage, magnetic storage, information that may be used to store information that may be accessed by a computing device.

The technical advantages of the present invention over prior art include::
(1) Feature dimension reduction: in a data preprocessing stage, a three-dimensional Cartesian coordinate system is replaced with a spherical coordinate system to realize three-dimensional to two-dimensional feature space conversion, so as to reduce input features, so as to improve the calculation speed of a subsequent deep neural network input layer. Meanwhile, the new feature also greatly retains the information of the original feature, thereby ensuring the segmentation precision.
(2) constructing a lightweight semantic segmentation network Cspranogeneet: using a strategy of fusion of a branch structure and a cross-stage feature, and proposing a lightweight full convolution semantic segmentation network Cspranogeneet based on a two-dimensional distance image, so that the model has a smaller number of parameters than that of the same type of model (there are 35%), the model storage cost is smaller, the calculation amount in the training and reasoning process is also reduced, and point cloud semantic segmentation at the laser radar operation frame rate (above 10 Hz) is realized.
(3) Inference acceleration: Since the segmentation network adopts a full convolution structure, meanwhile, the optimization stage adopts a two-dimensional matrix-based sliding window voting mechanism, and these calculation modes all have independence, so that the GPU can perform parallel calculation on the two-dimensional matrix to implement reasoning acceleration, and the operation rate of the method is further improved.

### BRIEF DESCRIPTION OF THE DRAWINGS

FIG. 1 is an overall flowchart of a three-dimensional laser radar point cloud semantic segmentation method based on deep learning of the present invention;
FIG. 2 is a schematic diagram of a lightweight deep fully convolutional neural network Csprandgenet network structure model of the method of the present invention;
FIG. 3 is a schematic structural diagram of a CSP-RES module in an encoder provided by the method of the present invention;
FIG. 4 is an overall flowchart of a data preprocessing part provided by the present disclosure;
FIG. 5 is a schematic structural diagram of a point cloud semantic segmentation apparatus according to the present disclosure;
FIG. 6 is a schematic structural diagram of an electronic device and a medium according to the present disclosure.

### DETAILED DESCRIPTION OF THE EMBODIMENTS

The drawings are for illustrative purposes only and are not to be construed as limiting the present disclosure; in order to better illustrate the present embodiment, some components of the drawings may be omitted, enlarged or reduced, and do not represent the size of the actual product; for those skilled in the art, some well-known structures and descriptions thereof in the accompanying drawings may be omitted. The positional relationships described in the drawings are for illustrative purposes only and are not to be construed as limiting the present invention.

The present invention will be described in detail below with reference to the accompanying drawings and examples.

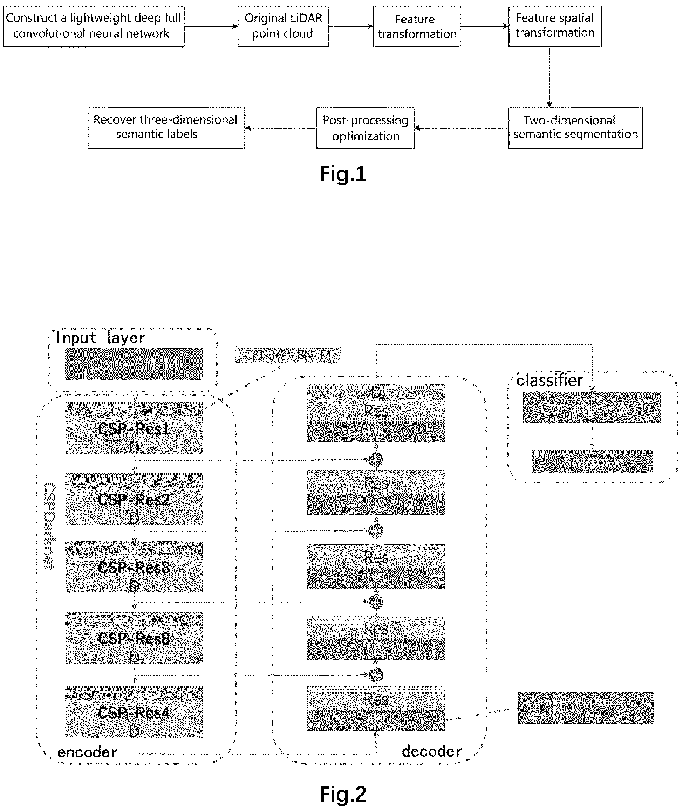

FIG. 1 is an overall flowchart of a three-dimensional laser radar point cloud semantic segmentation method based on deep learning according to an embodiment of the present invention, and the method includes the following steps:
step 1: constructing a lightweight deep fully convolutional neural network; constructing a fully convolutional neural network for training composed of three parts, namely, an encoder, a decoder, and a classifier;
step 2: original point cloud feature transformation of the laser radar; obtaining an original three-dimensional point cloud data set from the laser radar, and performing dimension reduction to form four feature dimensions after feature transformation and splicing;
step 3: converting the three-dimensional spatial feature into a two-dimensional spatial feature, and preprocessing the two-dimensional spatial feature; generating a structured four-channel distance feature map from the disordered feature in a spherical projection manner, generating a single-channel two-dimensional semantic image from the sequence label, converting the single-channel two-dimensional semantic image into a format matching the format required by the preprocessed data, preprocessing the data, and dividing the preprocessed data sample into a training set and a test set;
step 4: training a lightweight deep fully convolutional neural network; using the point cloud feature map in the training set as a training sample, taking the point cloud semantic map as a real value label, training a deep full convolutional semantic segmentation neural network by using a back propagation and random gradient descent method, and finally obtaining an optimized model parameter by minimizing a loss function;
step 5: performing two-dimensional point cloud semantic segmentation; inputting the original point cloud into a two-dimensional semantic segmentation framework to obtain a two-dimensional spatial semantic label;
Step 6: Post-processing optimization of two-dimensional semantic labels; and by using a two-dimensional matrix-based sliding window voting mechanism, by using the characteristics of consistency of internal point cloud density and invariance of rotation and translation of a single object, global correction is performed on mislabeling caused by low data volume of a single category of point cloud frames and sparse point clouds due to remote sampling of point cloud and semantic boundary blurring.
Step 7: recovering the three-dimensional semantic label; and reflecting the label result after the two-dimensional semantic segmentation to the original three-dimensional point cloud semantic space to obtain a complete point cloud frame with a three-dimensional semantic label.

In the step 1, for the constructed lightweight deep fully convolutional network, that is, an input layer is included, one adopts a CSPDarkNet encoder implementing Cross Stage Partial network strategy (CSP) and a residual structure, a decoder is based on a deconvolution structure, and a classifier is used for pixel-by-pixel classification to form a point cloud segmentation network abbreviated as CSPRangeNet; the input is a preprocessed multi-channel two-dimensional point cloud distance image, and the output i t a two-dimensional semantic label corresponding to each pixel of the distance image.

In step 2, for the original point cloud feature transformation, the spatial position feature(x, y, z)of the original Cartesian coordinate system is transformed into (Ψ, θ, d) through the polar coordinate system, where Ψ is the pitch angle of the point cloud in the polar coordinate system, θ is the deflection angle of the point cloud in the polar coordinate system, d is the distance feature from the point cloud to the origin of the radar coordinate system, and after the feature transformation, a quadruple feature is formed, that is, (Ψ, θ, d, r), and r is the reflection intensity of the surface material of the object where the point cloud is located.

The step 3 converts the three-dimensional spatial feature into a two-dimensional spatial feature, uses the spatial position feature (x, y, z) of the Cartesian coordinate system of each point in a spherical projection manner, combines the parameters of the vehicle-mounted laser radar itself to obtain the (h, w) index pair of each point, h is the column index of the distance image, and w is the distance image row index. The quadruple features and (h, w) of all the point clouds of the single frame obtained in the step 2 are sorted in a descending order according to the size of the feature d. The rearranged quadruple features are respectively mapped to the corresponding two-dimensional distance feature maps through (h, w), and the feature maps are spliced and standardized to obtain a feature map with a size of 4 × H × W, where H is the vertical resolution of the distance feature map, and W is the horizontal resolution of the distance feature map; The original discontinuous three-dimensional semantic tag uses a label mapping table to firstly generate a continuous label through label mapping, and then the continuous label is mapped to a two-dimensional image through (h, w), so that a single-channel two-dimensional semantic image with a size of H × W 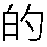 is obtained.

In the process of training the lightweight fully convolutional neural network in step 4, the loss function uses the weight cross entropy loss combined with the model structure loss; and in the stochastic gradient descent, a preheating learning rate mechanism is used to dynamically adjust the learning rate, thereby improving convergence efficiency and convergence precision.

In step 5, for two-dimensional point cloud semantic segmentation, after the original point cloud is preprocessed in steps 2, 3 and 4, the original point cloud is input into a lightweight deep fully convolutional neural network for point-by-point reasoning, so as to obtain a two-dimensional spatial semantic label.

Step 6: For a two-dimensional matrix-based sliding window voting mechanism, for each pixel point in the two-dimensional semantic label image obtained in step 5, a pixel point within the domain range is determined according to the distance threshold, voting is performed according to the label, and global correction is performed on the two-dimensional semantic label; since the operation on each point in the two-dimensional matrix is independent, a graphics processing unit (GPU) may be used for parallel calculation to accelerate the operation process.

The step 7 recovers the three-dimensional semantic label using the label reflecting table, reflects the optimized two-dimensional semantic label obtained in step 6 back to the three-dimensional semantic space, and finally obtains the complete point cloud frame with the three-dimensional semantic label.

FIG. 2 is a schematic diagram of a lightweight deep fully convolutional neural network CSPRangeNet Architecture model according to an embodiment of the present invention. There are a CSPDarkNet encoder composed of a cross-stage feature fusion strategy and a residual structure, one decoder based on deconvolution structure, and one classifier for pixel-by-pixel classification. The specific composition is as follows:
1. The input layer is composed of a convolutional layer-a batch normalization layer-a Mish activation function layer (Conv-Bn-M). The Mish activation function is shown in the following formula (1-3):
   $Mish \left(x\right) = x \times tanh \left(ξ\left(x\right)\right)$
   $tanh \left(x\right) = \frac{{e}^{x} - {e}^{- x}}{{e}^{x} + {e}^{- x}}$
   $ξ \left(x\right) = log \left(1+{e}^{x}\right)$
   where x is the feature map of the input, tanh(x) is the hyperbolic tangent function, and ξ(x) is an exponential function with base e. The size of the convolution kernel in the convolution layer is 1×1, the number is 32, and the step size is 1×1. The input data is a distance feature map of size C×H×W after feature transformation and preprocessing, where C is the number of feature channels, here 4, H is the number of laser beams in the vertical direction of the LIDAR, and W is the size of the horizontal angular resolution of the distance feature map.
2. The encoder is CSPDarkNet. The structure is composed of a cross-stage feature fusion layer and a residual network, and is divided into five sub-encoders, and each sub-encoder is composed of a down-sampling layer (DS), a cross-stage feature fusion residual layer (CSP-Res) and a random inactivation layer (D). Each down-sampling layer is composed of a convolution layer-batch normalization layer-Mish activation function layer (C (3 * 3/2)-BN-M), the convolution kernel size is 3 × 3, the step size is 1 × 2, the number of down-sampling layers in the five sub-encoders is [64, 128, 256, 512, 1024] in sequence, through this layer, the distance feature map remains unchanged in the H dimension, the W dimension is reduced by half, and the dimension of C is increased by one time, thereby accelerating the subsequent feature extraction operation speed ; The feature extraction structure of each sub-encoder is composed of a cross-stage feature fusion residual layer (CSP-Res), the difference is the number of residualwhich are [1, 2, 8, 8, 4] in sequence in the five sub-encoders ,and the cross-stage feature fusion residual layer of the five sub-encoders composed of are [CSP-Res 1, CSP-Res 2, CSP-Res 8, CSP-Res 8, CSP-Res 4] in sequence, which allow the extraction of deep features from the down-sampled feature map ; Therandom dropout layer (D)randomly deactivates the extracted deep feature map by using the probability P, where P is 0.05.
3. The decoder consists of five sub-decoders, each consisting of an up-sampling module (US) and a residual block (Res). The up-sampling module is an inverse - convolution structure (ConvTransposed2d(4*4/2), the convolution kernel size is 4 × 4, the step length of that is 2, and the numbers of that in the five sub-decoders are [1024, 512, 256, 128, 64] in sequence, which upsamples the feature extracted by the backbone encoder i.e., rises 32 times in the W-dimension to restore to the original feature map resolution H × W, and followed closely by a residual block (Res) to improve the result ; At the same time, after each up-sampling, a jump connection is added between the outputs of different resolutions of the encoder, that is, the output of the decoder is added to the output of the corresponding encoder to recover some high-frequency edge information lost in the down-sampling process; and in the last sub-decoder, arandom dropout layer (D) is added, and the shallow feature map after five times of decoding is randomly inactivated by using the probability P, where P is 0.05.
4. The classifier part consists of a convolutional layer (Conv(N*3*3/1) and an exponential normalization layer (Softmax). The convolution kernel sizeof the convolution layer is 3 × 3, the step length of that is 1, and the number of that is N, wherein N is the number of two-dimensional semantic tags; dim = 0 in the exponential normalization layer (Softmax), that is, normalization processing is performed on the first dimension, and a probability distribution of the two-dimensional semantic category is output on each pixel point.

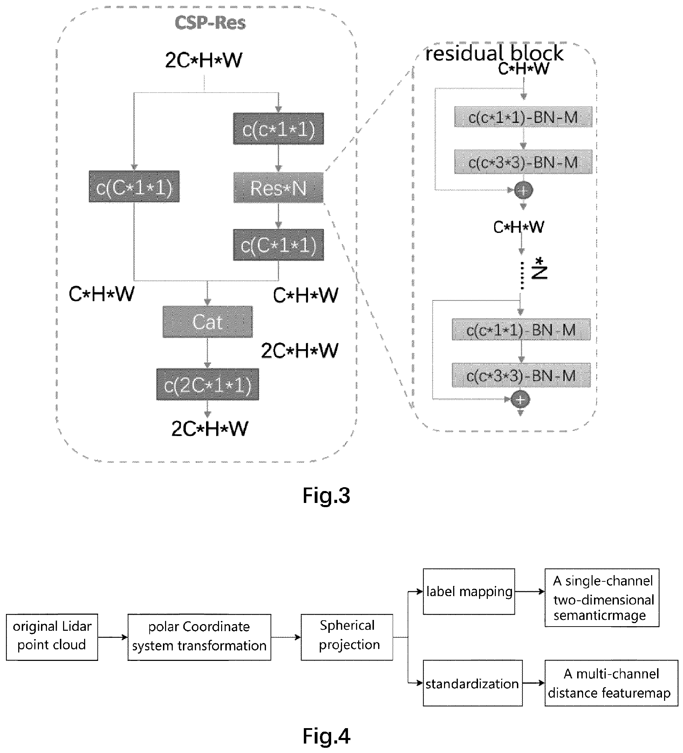

FIG. 3 is a schematic structural diagram of a CSP-Res module in an encoder according to an embodiment of the present invention. It is a cross-stage feature fusion layer, which is a hierarchical feature fusion mechanism, adopts the idea of pre-fusion and post-fusion, uses a gradient flow truncation strategy, maximizes the difference of gradient combination to prevent residual networks and other convolutional layers from learning repeated gradient information, and the learning ability of the network is theoretically improved. The specific steps are as follows:
(11) Inputting a 2C * H * W feature map, and performing a left branch convolutional layer (C (C * 1 * 1)), where the convolution kernel size is 1 × 1, the step size is 1 × 1, and the number is C, to obtain a C * H * W feature map.
(12) inputtinga feature map of 2C * H * W ithrough a right branch depth feature extraction layer including two convolutional layers (C (C * 1 * 1)) and one stacked residual network (Res * N), and the specific process is as follows:
   (2a) inputting the feature map of 2C * H * W into the first layer of a convolutional layer C (C * 1 * 1)), wherein the size of the convolution kernel is 1 × 1, the step size is 1 × 1, and the number is of that C.
   (2b) inputting result of step (2a) to a second layer of a residual network structure (Res * N), where there are N residual blocks stacked on the layer. The specific calculation process of each residual block is as follows:
      (2b-1) inputting the result of step (2a) into the first convolutional layer (C * 1 * 1) of the residual block, wherein the size of the convolution kernel is 1 × 1, the step size is 1 × 1, and the number of that is C.
      (2b-2) inputting the result of step (2 b-1) into the second convolutional layer (C * 3 * 3) of the residual block, wherein the size of the convolution kernel is 3 × 3, the step size is 1 × 1, and the number of that is C.
      (2b-3) adding the result of step (2b-2) to the result of step (2a).
      (2B-4) inputting the result of step (2b 3) into the subsequent N - 1 residual blocks for continuous operation.
(13) The result of (2b-4) is stitched (Cat) over the first channel with the result of step(1)
(14) inputting the result of step (13) into the last convolution layer (C (2C * 1 * 1)) to perform feature fusion, wherein the convolution kernel size is 1 × 1, the step size is 1 × 1, the number of that is 2C, and the final output feature map size is 2C * H * W.

FIG. 4 is an overall flowchart of a data preprocessing part according to an embodiment of the present disclosure, wherein steps 2 and 3 in the flow chart are connected in series to the specific operation steps in step 2 and step 3 in the above specific embodiments
(21) Parse the lidar data to obtain an original lidar point cloud frame, where each frame size is N × 4, where n is a quantity of point clouds in each frame, 4 is a feature dimension of each point, that is, [x, y, z, r, where (x, y, z) is a spatial position representation of the point cloud in a three-dimensional Cartesian coordinate system, and r is a reflection intensity of a surface material of an object where the point cloud is located.

(22) The (x, y, z) in the original lidar point cloud frame is transformed by the polar coordinate system to obtain the spatial position representation (Ψ , θ , d) in the polar coordinate system, where Ψ is the horizontal deflection angle in the polar coordinate system, θ is the vertical deflection angle in the polar coordinate system, and d is the distance from the point to the origin of the coordinate system. The polar coordinate system is transformed as shown in the following formula (4-6):
$d = \sqrt{{x}^{2} + {y}^{2} + {z}^{2}}$
$θ = {cos}^{- 1} \frac{z}{\sqrt{{x}^{2} + {y}^{2} + {z}^{2}}}$
$φ = {tan}^{- 1} \frac{y}{x}$

The obtained (Ψ , θ , d) and r groups are merged to replace the original four-dimensional features to obtain new four-dimensional features (Ψ , θ , d , r) ; where Ψ is the pitch angle of the point cloud in the polar coordinate system, θ is the deflection angle of the point cloud in the polar coordinate system, d is the distance feature from the point cloud to the origin of the radar coordinate system, and after the feature transformation, a quadruple feature is formed, that is, (Psi, theta, D, R), and r is the reflection intensity of the surface material of the object where the point cloud is located.

(23) The (h, w) index pair of each point is obtained by using the spatial position feature (x, y, z) of the Cartesian coordinate system of each point in combination with the spatial position feature (x, y, z) of the Cartesian coordinate system of each point, h is the column index of the distance image, and w is the distance image row index. The spherical projection is shown in the following formula (7-9):
$f = {f}_{down} + {f}_{up}$
$h = \left⌊H\left(1-\left(\frac{π}{2}-θ+{f}_{down}\right)/f\right)\right⌋$
$w = \left⌊W\left(\frac{1}{2}-φ/2π\right)\right⌋$
where f is the range of the vertical field of view of the laser radar, f_{down} is the lower limit of the vertical field of view of the laser radar, fᵤₚ is the upper limit of the vertical field of view of the laser radar, h is the vertical resolution of the distance feature map, and is generally a laser radar beam, W is the horizontal resolution of the distance feature map,
$\left⌊.\right⌋$ is the down rounding function, all point cloud quadruple features and (h, w) of the single frame obtained in step 2 are sorted in a descending order according to the value of the feature d. respectively mapping the rearranged quadruple features to corresponding two-dimensional distance feature maps through (h, w), and splicing and standardizing the feature maps to obtain a feature map with a size of 4 × H × W, where H is a vertical resolution of the distance feature map, and W is a horizontal resolution of the distance feature map;
(24) A final feature map is obtained by using a standardized processing manner for a distance feature map with a size of 4 × H × W. The standardization processing process is shown in the following formula (10):
   ${x}_{i} = \frac{{x}_{i} - {μ}_{i}}{{σ}_{i}}$
where xᵢ is a feature value of the feature map on each feature channel, µᵢ is a feature mean value on a corresponding feature channel, σᵢ is a feature variance on a corresponding feature channel, and i is 0-3; and the method performs standardization processing on each feature channel to obtain a final standardized four-channel distance feature map.

(25) Applying the (h, w) index pair obtained in step (23) to the original noncontinuous three-dimensional semantic label, using a label mapping table, first performing label mapping to generate a continuity label, and then mapping the continuity label to the two-dimensional image through (h, w), to obtain a single-channel two-dimensional semantic image with a size of H × W. Since the real label index is discontinuous in the data labeling process to distinguish various categories in the data annotation process, and the subsequent semantic reasoning stage needs continuous real labels; meanwhile, for some scenes, the individual semantic category scene does not appear, and if the model learns the features of such labels, it is easy to interfere with the model, and the model must be prevented from over-learning the interference category information. Therefore, such labels need to be mapped with existing labels to implement label merging and continuity; the label merging process is expressed as follows:
${label}_{mapped} ← index \left[{label}_{origin}\right]$
label_{mapped} is a mapped label, label_{origin} is an original label, and index is a mapping relationship dictionary as a specific embodiment, as shown in Table (1) below:

**TABLE (1)**

| Original label | Originalindex | Mappingindex | Mapping label |
|---|---|---|---|
| unlabeled | 0 | 0 | unlabeled |
| outlier | 1 | 0 | unlabeled |
| car | 10 | 1 | car |
| bicycle | 11 | 2 | bicycle |
| bus | 13 | 5 | other-vehicle |
| motorcycle | 15 | 3 | motorcycle |
| on-rails | 16 | 5 | truck |
| truck | 18 | 4 | truck |
| other-vehicle | 20 | 5 | other-vehicle |
| person | 30 | 6 | person |
| bicyclist | 31 | 7 | bicyclist |
| motorcyclist | 32 | 8 | motorcyclist |
| road | 40 | 9 | road |
| parking | 44 | 10 | parking |
| sidewalk | 48 | 11 | sidewalk |
| other-ground | 49 | 12 | other-ground |

In this example, a three-class label of the original label index 0-49 is mapped to a continuous index 0-12; the following is input in the process: 1 × N original point cloud label label_{origin}, where N is the number of point clouds; the number of categories n_{class}; and the mapping relationship dictionary in the following form:
$map _ dict : key ∈ \left(0,max\left({origin}_{label}\right), value∈\left(0, {n}_{class}\right)\right.$
where map_dict is the mapping dictionary, key is the key of the dictionary, value is the value of the dictionary, origin_{label} is the original label index value, and max() is the maximum value function. The final output result is obtained as the mapped single-channel two-dimensional semantic graph label_{mapped}.

Obviously, the above embodiments of the present disclosure are merely examples for clearly illustrating the present disclosure, and are not intended to limit the implementations of the present disclosure. For those of ordinary skill in the art, other different forms of changes or variations can be made on the basis of the above description. There is no need to be exhaustive of all embodiments herein.

In the process of training the lightweight full convolutional neural network in step 4, the loss function uses the weight cross entropy loss combined with the model structure loss; and in the stochastic gradient descent, a preheating learning rate mechanism is used to dynamically adjust the learning rate, thereby improving convergence efficiency and convergence precision. The loss function is as formulas(11-14):
$L 1 = - {\sum }_{c = 0}^{N} {w}_{c} {y}_{c} log \left(\hat{{y}_{c}}\right)$
${w}_{c} = \left\{\begin{matrix}0 , & c = 0 \\ \frac{1}{{f}_{c} + ϵ} , & other\end{matrix}\right.$
$L 2 = \frac{α}{2} {\left‖w\right‖}_{2}^{2}$
$loss = L 1 + L 2$

Wherein,
L1 is the weight cross entropy loss, C is a category label, *w_{c}* is the weight of category C, N is the number of category labels, and as a specific embodiment, in this example, 20 is taken;
$\hat{{y}_{c}}$ represents the probability estimation value of C of the sample label; *y_{c}* is the probability real value of C of the sample label; *f_{c}* represents the proportion of the total sample occupied by the sample with the category c, ε is a bias, and as a specific embodiment, in this example, the curvature 0.001;
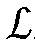 2 is a structure loss of the model, α is a proportionality coefficient of the loss, as a specific embodiment, in this example, 0.5 is taken; W is a one-dimensional vector composed of all parameters of the model,
${\left‖⋅\right‖}_{2}^{2}$ is a two-norm; Loss is the total loss of the model.

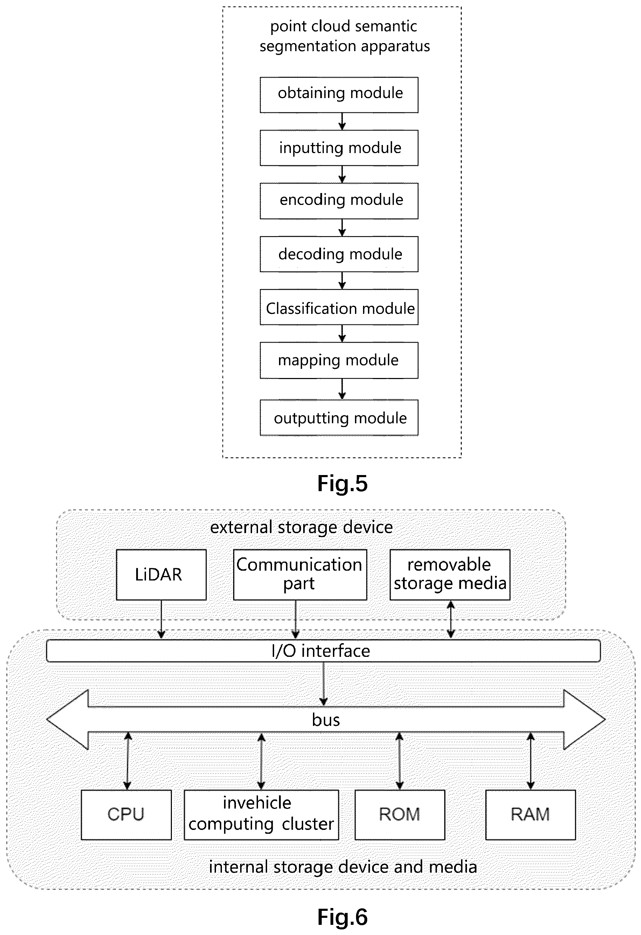

FIG. 5 is a schematic structural diagram of a point cloud semantic segmentation apparatus according to an embodiment of the present invention. Specifically, the method includes:
an obtaining module, configured to obtain original point cloud data; and
an input module, configured to pre-process the original point cloud data, and extract a pre-processed feature of each point in the point cloud data through a first convolutional layer; and
an encoding module, configured to perform feature extraction and downsampling on an input point cloud feature by using a preset number of encoding layers to obtain an intermediate feature map corresponding to each layer of encoding layer, where the encoding layer includes a downsampling module, a cross-stage feature fusion residual module, and a random deactivation module;
a decoding module, configured to perform feature decoding and upsampling on the intermediate feature mapping by using a preset number of decoding layers to obtain up-sampling feature mapping corresponding to each layer of decoding layer, where the decoding layer includes an up-sampling module and a residual module;
a classification module, configured to perform global summarization on intermediate feature maps generated by the decoding layer, and perform point-by-point two-dimensional semantic classification by using global features; and
a mapping module, configured to map the two-dimensional semantic tags generated by the classification module back to a three-dimensional space to generate a three-dimensional semantic tag;
an output module, configured to summarize the point-by-point three-dimensional semantic labels output by the mapping module according to the scene frames, and output the three-dimensional semantic scene frames.

FIG. 6 is a schematic structural diagram of an electronic device and a medium according to an embodiment of the present disclosure. The laser radar includes a laser radar, a processor, a removable storage medium, a communication part, a vehicle-mounted computing cluster, a memory, and a computer program stored in the memory ; The processor executes the program to implement the three-dimensional laser radar point cloud semantic segmentation method based on deep learning according to any one of claims 1-9, wherein the vehicle-mounted computing cluster is a graphics processing unit (GPU) cluster, to implement the training and reasoning process according to any one of claims 6-9.

The following external electronic device and medium are connected to an input/output (IO) interface: including a solid state, a semi-solid state, a mechanical rotating laser radar, which can capture information in an environment to generate original point cloud data as a subsequent model input ; A communication portion of a network interface card, such as a LAN card, a modem, etc. may perform communication processing via a network such as the Internet; a removable storage medium such as a magnetic disk, an optical disk, a magneto-optical disk, a semiconductor memory, etc. reads the computer program stored therein from the I/O port as needed or writes to it a semantic segmentation result data frame to be persisted;
The following internal electronic devices and mediums include: a central processing unit (CPU), which can execute various instructions and actions according to a program stored in a read-only memory (ROM) and loaded into a random access memory (RAM) ; In the RAM, various programs and data required for the operation of the device are also stored; the vehicle-mounted computing cluster is responsible for receiving instructions from the CPU and data from the ROM, and performing large-scale data parallel computing, in particular, the vehicle-mounted graphics processing unit cluster (GPU) is connected through a computer internal high-speed bus (PCI-E); and the CPU, the vehicle-mounted computing cluster, the ROM and the RAM are connected to each other through a bus. the I/O interface is also connected to the bus;
In particular, according to embodiments of the present disclosure, the process described above with reference to FIG. 1 May be implemented as a computer software program. For example, an embodiment of the present disclosure includes a computer program product based on a deep learning and laser radar point cloud semantic segmentation method, which includes a computer program tangibly contained on a machine-readable medium, and the computer program includes program code for executing the above-mentioned semantic segmentation method. In such an embodiment, the computer program may be downloaded and installed from the network through the communication portion, and/or installed from the removable storage medium.
The system, apparatus, module, or unit illustrated in the foregoing embodiments may be specifically implemented by a computer chip or an entity, or may be implemented by a product having a certain function. A typical implementation device is an on-board computer. Specifically, the vehicle-mounted computer may be, for example, a personal computer, a notebook computer, a tablet computer, a workstation, or a combination of any of these devices.

In another aspect, this application further provides a storage medium, where the storage medium may be a storage medium included in the foregoing apparatus in the foregoing embodiments, or may exist alone, and is not assembled into a storage medium in the device. The storage medium stores one or more programs, and the program is used by one or more processors to execute the three-dimensional laser radar point cloud semantic segmentation method based on deep learning of the present disclosure. It includes permanent and non-permanent, removable and non-removable media that can implement information storage by any method or technology. The information may be computer instructions, program modules or raw data, result data, and other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, or other optical storage, magnetic storage, information that may be used to store information that may be accessed by a computing device.

## Claims

1. A three-dimensional laser radar point cloud semantic segmentation method based on deep learning, comprising the following steps:
step 1: constructing a lightweight deep fully convolutional neural network; constructing a fully convolutional neural network for training composed of three parts, namely, an encoder, a decoder, and a classifier;
step 2: performing feature transformation on the original point cloud of the laser radar; obtaining an original three-dimensional point cloud data set from the laser radar, and performing dimension reduction to form four feature dimensions after feature transformation and splicing;
step 3: converting the three-dimensional spatial feature into a two-dimensional spatial feature, and preprocessing the two-dimensional spatial feature; generating a structured four-channel distance feature map from the disordered feature in a spherical projection manner, generating a single-channel two-dimensional semantic image from the sequence label, converting the single-channel two-dimensional semantic image into a format matching the format required by the preprocessed data, preprocessing the data, and dividing the preprocessed data sample into a training set and a test set;
step 4: training a lightweight deep fully convolutional neural network; using the point cloud feature map in the training set as a training sample, taking the point cloud semantic map as a real value label, training a deep full convolutional semantic segmentation neural network by using a back propagation and random gradient descent method, and finally obtaining an optimized model parameter by minimizing a loss function;
step 5: performing semantic segmentation on the two-dimensional point cloud; inputting the original point cloud into a two-dimensional semantic segmentation framework to obtain a two-dimensional spatial semantic label;
step 6: performing post-processing optimization on the two-dimensional semantic label; using a sliding window voting mechanism based on a two-dimensional matrixand using the characteristics of consistency of internal point cloud density and invariance of rotation and translation of a single object, and performing global correction onmislabeling caused by low data volume of a single category of point cloud frames, and sparse point clouds due to long-distance sampling, and fuzzy semantic boundary ;
Step 7: recovering the three-dimensional semantic label; reflecting the label result after the two-dimensional semantic segmentation back into the original three-dimensional point cloud semantic space to obtain complete point cloud frames with three-dimensional semantic label.

2. The method for three-dimensional laser radar point cloud semantic segmentation based on deep learning according to claim 1, wherein the lightweight deep fully convolutional network described in step 1 includes an input layer, a CSPDarkNet encoder implementing Cross Stage Partial network strategy (CSP) and a residual structure, a decoder based on deconvolution structure, and a classifier for pixel-by-pixel classification, constituting a point cloud segmentation network, abbreviated as CSPRangeNet ; The input is a pre-processed multi-channel two-dimensional point cloud distance image, and the output is a two-dimensional semantic label corresponding to each pixel of the distance image.
The input layer is composed of a convolutional layer-a batch normalization layer-a Mish activation function layer (Conv-Bn-M). The Mish activation function is shown in the following formula (1-3): $Mish \left(x\right) = x \times tanh \left(ξ\left(x\right)\right)$ $tanh \left(x\right) = \frac{{e}^{x} - {e}^{- x}}{{e}^{x} + {e}^{- x}}$ $ξ \left(x\right) = log \left(1+{e}^{x}\right)$
where x is the feature map of the input, tanh(x) is the hyperbolic tangent function, and ξ(x) is an exponential function with base e. The size of the convolution kernel in the convolution layer is 1×1, the number is 32, and the step size is 1×1. The input data is a distance feature map of size C×H×W after feature transformation and preprocessing, where C is the number of feature channels, here 4, H is the number of laser beams in the vertical direction of the LIDAR, and W is the size of the horizontal angular resolution of the distance feature map.
The encoder is CsPDarkNet, consists of a cross-stage feature fusion layer and a residual network, and is divided into five sub-encoders, each sub-encoder being composed of a down-sampling layer (DS), a cross-stage feature fusion residual layer (CSP-RES) and a random inactivation layer (D), wherein each down-sampling layer is composed of a convolutional layer-batch normalization layer-Mish activation function layer (C (3 * 3/2)-BN-M), the size of convolution kernels is 3 × 3, the step length is 1 × 2, the number of down-sampling layers in the five sub-encoder are [64,128,256,512,1024] in turn, and after passing through the down - sampling layer, the distance feature map remains unchanged in the H dimension, and is reduced by half in the W dimension, and is increased by one time in C dimension, thereby accelerating the subsequent feature extraction operation speed ; The feature extraction structure of each sub-encoder is composed of a cross-stage feature fusion residual layer (CSP-Res), the difference is the number of residual blocks which are [1, 2, 8, 8, 4] respectively in sequence in the five sub-encoders, and the cross-stage feature fusion residual layers of the five sub-encoders composed of are [CSP-Res 1, CSP-Res 2, CSP-Res 8, CSP-Res 8, CSP-Res 4] in sequencewhich allow the extraction of deep features from the down-sampled feature map; Therandom dropout layer (D) randomly inactivates the extracted deep feature map by using the probability P.
The CSPDarknet encoder including five CSP-Res module structures, is a cross-stage feature fusion layer (Partial Transition Layer) , is a hierarchical feature fusion mechanism, adopts the idea of pre-fusion and post-fusion, adopts a gradient flow truncation strategy, maximizes the difference of gradient combination to prevent residual networks and other convolution layers from learning repeated gradient information, and the learning ability of the network is theoretically improved. The specific steps are as follows:
(11) inputting a 2C * H * W feature mapg through a left branch convolutional layer (C (C * 1 * 1)), wherein the convolution kernel size is 1 × 1, the step length is 1 × 1, and the number is C, to obtain a C * H * W feature map;
(12) inputting a feature map of 2C * H * W\ throuth a right branch depth feature extraction layer including two convolutional layers (C (C * 1 * 1)) and one stacked residual network (Res * N), and the specific process is as follows:
(2a) inputting the feature map of 2C * H * W into the first layer of a convolutional layer C (C * 1 * 1)), wherein the size of the convolution kernel is 1 × 1, the step size is 1 × 1, and the number of that is C.
(2b) inputting the result of step (2a) into a second layer of a residual network structure (Res * N), where there are N residual blocks stacked on the layer. The specific calculation process of each residual block is as follows:
(2b-1) inputting the result of step (2a) into the first convolutional layer (C * 1 * 1) of the residual block, wherein the size of the convolution kernel is 1 × 1, the step size is 1 × 1, and the number of that is C.
(2b-2) inputting the result of step (2 b-1) into the second convolutional layer (C * 3 * 3) of the residual block, wherein the size of the convolution kernel is 3 × 3, the step size is 1 × 1, and the number of that is C.
(2b-3) adding the result of step (2b-2) to the result of step (2a).
(2b-4) inputting the result of step (2b-3) into the subsequent N - 1 residual blocks for continuous operation.
(13) splicing the result of step (2b-4) with the result of step (11) on the first channel (Cat);
(14) inputting the result of step (13) into the last convolution layer (C (2C * 1 * 1)) to perform feature fusion, wherein the convolution kernel size is 1 × 1, the step size is 1 × 1, the number of that is 2C, and the final output feature map size is 2C * H * W.
The decoder is composed of five sub-decoders, and each sub-decoder is composed of an up-sampling module (US) and a residual block (Res). Wherein, the up-sampling module is an inverse convolution structure (ConvTransposed2d(4*4/2)), the size of the convolution kernel is 4 × 4, the step length of that is 2, and the number of that of the five sub-decoders is [1024, 512, 256, 128, 64] in sequence, which upsamples the feature extracted by the backbone encoder, i.e., rises 32 times in the W-dimension to restore to the original feature map resolution H × W, and followed closely by a residual block (Res) to improve the result; ; At the same time, after each up-sampling, a jump connection is added between the outputs of different resolutions of the encoder, that is, the output of the decoder is added to the output of the corresponding encoder to recover some high-frequency edge information lost in the down-sampling process; and in the last sub-decoder, arandom dropout layer (D) is added, and the shallow feature map after five times of decoding is randomly inactivated by using the probability P, where P is 0.05.
The classifier part is composed of a convolutional layer (Conv(N*3*3/1)) and an exponential normalization layer (Softmax). The convolution kernel size of the convolution layer is 3 × 3, the step length of that is 1, and the number of that is N, wherein N is the number of two-dimensional semantic tags; dim = 0 in the exponential normalization layer (Softmax), that is, normalization processing is performed on the first dimension, and a probability distribution of the two-dimensional semantic category is output on each pixel point.

3. The three-dimensional laser radar point cloud semantic segmentation method based on deep learning according to claim 1, wherein The original point cloud feature transformation described in step 2 generates a four-dimensional feature (Ψ ^{,} θ ^{,} d ^{,} r)by means of coordinate system transformation as a new feature, and the specific operation steps are as follows:
(21) Parse the lidar data to obtain an original lidar point cloud frame, where each frame size is n × 4, where n is a quantity of point clouds in each frame, 4 is a feature dimension of each point, that is, [x, y, z, r], where (x,y,z) is a spatial position representation of the point cloud in a three-dimensional Cartesian coordinate system, and R is a reflection intensity of a surface material of an object where the point cloud is located.
(22) The (x, y, z) in the original lidar point cloud frame is transformed by the polar coordinate system to obtain the spatial position representation (Ψ ^{,} θ ^{,} d) in the polar coordinate system, where Ψ is the horizontal deflection angle in the polar coordinate system, θ is the vertical deflection angle in the polar coordinate system, and d is the distance from the point to the origin of the coordinate system. The polar coordinate system is transformed as shown in the following formula (4-6): $d = \sqrt{{x}^{2} + {y}^{2} + {z}^{2}}$ $θ = {cos}^{- 1} \frac{z}{\sqrt{{x}^{2} + {y}^{2} + {z}^{2}}}$ $φ = {tan}^{- 1} \frac{y}{x}$
combining the obtained (Ψ ^{,} θ ^{,} d) with r to replace the original four-dimensional feature to obtain a new four-dimensional feature (Ψ ^{,} θ ^{,} d ^{,} r);
where Ψ is the pitch angle of the point cloud in the polar coordinate system, θ is the deflection angle of the point cloud in the polar coordinate system, d is the distance feature from the point cloud to the origin of the radar coordinate system, and after the feature transformation, a quadruple feature is formed, that is, (Ψ, θ, d, r), and r is the reflection intensity of the surface material of the object where the point cloud is located.

4. The three-dimensional laser radar point cloud semantic segmentation method based on deep learning according to claim 1, wherein The three-dimensional space feature in step 3 is converted into a two-dimensional spatial feature to generate a structured four-channel distance feature map, and the main steps are as follows:
(31) The (h, w) index pair of each point is obtained by using the spatial position feature (x, y, z) of the Cartesian coordinate system of each point in combination with the parameters of the vehicle-mounted laser radar, h is the column index of the distance image, and w is the distance image row index; and the spherical projection is shown in the following formula (7-9): $f = {f}_{down} + {f}_{up}$ $h = \left⌊H\left(1-\left(\frac{π}{2}-θ+{f}_{down}\right)/f\right)\right⌋$ $w = \left⌊W\left(\frac{1}{2}-φ/2π\right)\right⌋$
where f is the range of the vertical field of view of the laser radar, f_{down} is the lower limit of the vertical field of view of the laser radar, fᵤₚ is the upper limit of the vertical field of view of the laser radar, H is the vertical resolution of the distance feature map, and is generally a laser radar beam, W is the horizontal resolution of the distance feature map, $\left⌊.\right⌋$
is the rounding down function, the quadruple features and (h, w) of all point clouds of the single frame obtained in step 2 are sorted in a descending order according to the value of the feature d; the rearranged quadruple features are respectively mapped to the corresponding two-dimensional distance feature maps through (h, w), and the feature maps are spliced and standardized to obtain a distance feature map with a size of [4 × H × W], where H is the vertical resolution of the distance feature map, and W is the horizontal resolution of the distance feature map;
(32) A final feature map is obtained by using a standardized processing manner for a distance feature map with a size of 4 × H × W. The standardization processing process is shown in the following formula (10): ${x}_{i} = \frac{{x}_{i} - {μ}_{i}}{{σ}_{i}}$
where xᵢ is a feature value of the feature map on each feature channel, µᵢ is a feature mean value on the corresponding feature channel, and σᵢ is a feature variance on the corresponding feature channel; and the method performs standardization processing on each feature channel to obtain a standardized four-channel distance feature map.
(33) Apply the (h, w)index pair obtained in the step (31), and use the label mapping table for the original discontinuous three-dimensional semantic label, firstly generate a continuity label through label mapping , and then maps the continuity label to the two-dimensional image through (h, w), to obtain a single-channel two-dimensional semantic image with a size of H × W. In order to distinguish various categories in the data annotation process,, the real label index is discontinuous, and the subsequent semantic reasoning stage needs continuous real labels; meanwhile, for some scenes, the individual semantic category scene will not appear, and if the model learns the features of such labels, it is easy to interfere with the model, and the model must be prevented from over-learning the interference category information. Therefore, such labels need to be mapped with existing labels to implement label merging and continuity; the label merging process is expressed as follows: ${label}_{mapped} ← index \left[{label}_{origin}\right]$ label_{mapped} is a mapped label, label_{origin} is an original label, and Index is a mapping relationship dictionary. The input is as follows: 1 × N original point cloud label label_{origin}, where N is the number of point clouds; the number of categories n_{class}; and the mapping relationship dictionary in the following form: $map_dict : key ∈ \left(0,max\left({origin}_{label}\right),value∈\left(0, {n}_{class}\right)\right.$
where map_dict is the mapping dictionary, key is the key of the dictionary, value is the value of the dictionary, origin_{labell} is the original label index value, and max() is the maximum value function. The final output result is obtained as the mapped single-channel two-dimensional semantic graph label_{mapped}.

5. The method for three-dimensional laser radar point cloud semantic segmentation based on deep learning according to claim 1, wherein In the process of training the lightweight full convolutional neural network in step 4, the loss function uses the weight cross entropy loss combined with the model structure loss; and in random gradient descent, a preheating learning rate mechanism is used to dynamically adjust the learning rate, thereby improving convergence efficiency and accuracy. The loss function is as formulas (11-14): $L 1 = - {\sum }_{c = 0}^{N} {w}_{c} {y}_{c} log \left({\hat{y}}_{c}\right)$ ${w}_{c} = \left\{\begin{matrix}0 , & c = 0 \\ \frac{1}{{f}_{c} + ϵ} , & other\end{matrix}\right.$
[0062] $L 2 = \frac{α}{2} {\left‖w\right‖}_{2}^{2}$
[0063] $loss = L 1 + L 2$
Wherein, 1is the weight cross entropy loss, C is the category label, *w_{c}* is the weight of the category C, N is the number of category labels,
$\hat{{y}_{c}}$ is a probability estimation value of C of the label after the training set sample is subjected to model reasoning, and *y_{c}* is a true probability value of C labeled by the above samples; *f_{c}* is the proportion of samples of category C in the total samples, and *ε* is a bias amount;
2 is a structure loss of the bit model, *α* is a proportionality coefficient of the loss, *w* is a one-dimensional vector composed of all parameters of the model, ${\left‖⋅\right‖}_{2}^{2}$ is a two-norm; Loss is the total loss of the model.

6. The three-dimensional laser radar point cloud semantic segmentation method based on deep learning according to claim 1, wherein The two-dimensional point cloud semantic segmentation described in step 5 is as follows: after the original point cloud is preprocessed in steps 2, 3 and 4, the original point cloud is input into a lightweight deep fully convolutional neural network for point-by-point reasoning, so as to obtain a two-dimensional spatial semantic label.

7. The three-dimensional laser radar point cloud semantic segmentation method based on deep learning according to claim 1, wherein In the two-dimensional matrix-based sliding window voting mechanism described in step 6, a pixel point in the domain range is determined according to the distance threshold for each pixel point in the two-dimensional semantic label image obtained in step 5, voting is performed according to the label, and global correction is performed on the two-dimensional semantic label; since the operation on each point in the two-dimensional matrix is independent, a graphics processing unit (GPU) may be used for parallel calculation to accelerate the operation process.

8. The three-dimensional laser radar point cloud semantic segmentation method based on deep learning according to claim 1, wherein
In step 7, the three-dimensional semantic label is recovered, the label reflecting table is used, the optimized two-dimensional semantic label obtained in step 6 is reflected back to the three-dimensional semantic space, and finally a complete point cloud frame with a three-dimensional semantic label is obtained.

9. A three-dimensional laser radar point cloud semantic segmentation apparatus based on deep learning, comprising:
an obtaining module, configured to obtain original point cloud data; and an input module, configured to pre-process the original point cloud data, and extract a pre-processed feature of each point in the point cloud data through a first convolutional layer; and
an encoding module, configured to perform feature extraction and downsampling on an input point cloud feature by using a preset number of encoding layers to obtain an intermediate feature map corresponding to each layer of encoding layer, where the encoding layer includes a downsampling module, a cross-stage feature fusion residual module, and a random deactivation module;
a decoding module, configured to perform feature decoding and upsampling on the intermediate feature mapping by using a preset number of decoding layers to obtain up-sampling feature mapping corresponding to each layer of decoding layer, where the decoding layer includes an up-sampling module and a residual module;
a classification module, configured to perform global summarization on intermediate feature maps generated by the decoding layer, and perform point-by-point two-dimensional semantic classification by using global features; and
a mapping module, configured to map the two-dimensional semantic tags generated by the classification module back to a three-dimensional space to generate a three-dimensional semantic tag;
an output module, configured to summarize the point-by-point three-dimensional semantic labels output by the mapping module according to the frames, and output the three-dimensional semantic frames.

10. An electronic device and a medium are provided, including: a laser radar, a processor, a removable storage medium, a communication part, a vehicle-mounted computing cluster, a memory, and a computer program stored in the memory ; The laser radar is a rotary laser radar, and the horizontal field angle range is 360°; when the processor executes the program, the three-dimensional laser radar point cloud semantic segmentation method based on deep learning according to any one of claims 1-4 is implemented; the vehicle-mounted computing cluster is a graphics processor (GPU) cluster to implement the training and reasoning process according to any one of claims 2-4;
The following external electronic device and medium are connected to an input/output (IO) interface: including a solid state, a semi-solid state, a mechanical rotating laser radar, which can capture information in an environment to generate original point cloud data as a subsequent model input; A communication portion of a network interface card, such as a LAN card, a modem, etc. may perform communication processing via a network such as the Internet; a removable storage medium such as a magnetic disk, an optical disk, a magneto-optical disk, a semiconductor memory, etc. reads the computer program stored therein from the I/O port as needed or writes to it a semantic segmentation result data frame to be persisted;
The following internal electronic devices and mediums include: a central processing unit (CPU), which can execute various instructions and actions according to a program stored in a read-only memory (ROM) and loaded into a random access memory (RAM) ; In the RAM, various programs and data required for the operation of the device are also stored; the vehicle-mounted computing cluster is responsible for receiving instructions from the CPU and data from the ROM, and performing large-scale data parallel computing, in particular, the vehicle-mounted graphics processing unit cluster (GPU) is connected through a computer internal high-speed bus (PCI-E); and the CPU, the vehicle-mounted computing cluster, the ROM and the RAM are connected to each other through a bus. The I/O interface is also connected to the bus.

11. The storage medium according to claim 10, wherein the storage medium may be a storage medium included in the apparatus according to claim 10, or may exist alone, and is not assembled into a storage medium in the device. The storage medium stores one or more programs, and the foregoing program is used by one or more processors to execute the three-dimensional laser radar point cloud semantic segmentation method based on deep learning described in the present disclosure, including permanent and non-permanent, movable and non-removable media, which may implement information storage by any method or technology. The information may be computer instructions, program modules or raw data, result data, and other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, or other optical storage, magnetic storage, information that may be used to store information that may be accessed by a computing device.

## Patentansprüche

1. Verfahren zur semantischen Segmentierung einer dreidimensionalen Laserradar-Punktwolke auf der Basis von Tiefenlernen, umfassend die folgenden Schritte: Schritt 1: Konstruieren eines leichtgewichtigen tiefen vollfaltungsbasierten neuronalen Netzwerks; Konstruieren eines vollfaltungsbasierten neuronalen Netzwerks zum Trainieren, das aus drei Teilen zusammengesetzt ist, nämlich einem Encoder, einem Decoder und einem Klassifizierer;
Schritt 2: Durchführen einer Merkmalstransformation an der ursprünglichen Punktwolke des Laserradar; Erhalten eines ursprünglichen dreidimensionalen Punktwolkendatensatzes von dem Laserradar und Durchführen einer Dimensionsreduktion, um nach Merkmalstransformation und Spleißen vier Merkmalsdimensionen zu bilden;
Schritt 3: Umwandeln des dreidimensionalen räumlichen Merkmals in ein zweidimensionales räumliches Merkmal und Vorverarbeiten des zweidimensionalen räumlichen Merkmals; Erzeugen einer strukturierten vierkanaligen Distanzmerkmalskarte aus dem ungeordneten Merkmal in einer sphärischen Projektionsweise, Erzeugen eines einkanaligen zweidimensionalen semantischen Bildes aus der Sequenzmarkierung, Umwandeln des einkanaligen zweidimensionalen semantischen Bildes in ein Format, das dem für die vorverarbeiteten Daten erforderlichen Format entspricht, Vorverarbeiten der Daten und Aufteilen der vorverarbeiteten Datenprobe in einen Trainingssatz und einen Testsatz;
Schritt 4: Trainieren eines leichtgewichtigen tiefen vollfaltungsbasierten neuronalen Netzwerks; Verwenden der Punktwolkenmerkmalskarte in dem Trainingssatz als Trainingsprobe, Verwenden der semantischen Punktwolkenkarte als Istwertmarkierung, Trainieren eines tiefen vollfaltungsbasierten neuronalen Netzwerks zur semantischen Segmentierung unter Verwendung eines Rückpropagations- und Zufallsgradientenabstiegsverfahrens und schließlich Erhalten eines optimierten Modellparameters durch Minimieren einer Verlustfunktion;
Schritt 5: Durchführen semantischer Segmentierung an der zweidimensionalen Punktwolke; Eingeben der ursprünglichen Punktwolke in einen zweidimensionalen Rahmen zur semantischen Segmentierung, um eine zweidimensionale räumliche semantische Markierung zu erhalten;
Schritt 6: Durchführen einer Nachverarbeitungsoptimierung an der zweidimensionalen semantischen Markierung; Verwenden eines Schiebefenster-Abstimmungsmechanismus auf der Basis einer zweidimensionalen Matrix und Verwenden der Eigenschaften der Konsistenz der internen Punktwolkendichte und der Invarianz von Rotation und Translation eines einzelnen Objekts sowie Durchführen einer globalen Korrektur von Fehlmarkierungen, die durch ein geringes Datenvolumen einer einzelnen Kategorie von Punktwolkenrahmen, durch aufgrund von Langstreckenabtastung spärliche Punktwolken und durch unscharfe semantische Grenzen verursacht werden;
Schritt 7: Wiederherstellen der dreidimensionalen semantischen Markierung; Zurückabbilden des Markierungsergebnisses nach der zweidimensionalen semantischen Segmentierung in den ursprünglichen dreidimensionalen semantischen Punktwolkenraum, um vollständige Punktwolkenrahmen mit dreidimensionaler semantischer Markierung zu erhalten.

2. Verfahren zur semantischen Segmentierung einer dreidimensionalen Laserradar-Punktwolke auf der Basis von Tiefenlernen nach Anspruch 1, wobei das in Schritt 1 beschriebene leichtgewichtige tiefe vollfaltungsbasierte Netzwerk eine Eingabeschicht, einen CSPDarkNet-Encoder, der eine Cross-Stage-Partial-Netzwerkstrategie (CSP) und eine Residualstruktur implementiert, einen auf einer Dekonvolutionsstruktur basierenden Decoder und einen Klassifizierer zur pixelweisen Klassifizierung umfasst, wodurch ein Punktwolkensegmentierungsnetzwerk gebildet wird, das als CSPRangeNet abgekürzt wird; wobei die Eingabe ein vorverarbeitetes mehrkanaliges zweidimensionales Punktwolkendistanzbild ist und die Ausgabe eine jeder Pixeleinheit des Distanzbildes entsprechende zweidimensionale semantische Markierung ist;
wobei die Eingabeschicht aus einer Faltungsschicht, einer Stapelnormalisierungsschicht und einer Mish-Aktivierungsfunktionsschicht (Conv-Bn-M) zusammengesetzt ist; wobei die Mish-Aktivierungsfunktion in den folgenden Formeln (1) bis (3) gezeigt ist: $Mish \left(x\right) = x \times tanh \left(ξ\left(x\right)\right)$ $tanh \left(x\right) = \frac{{e}^{x} - {e}^{- x}}{{e}^{x} + {e}^{- x}}$ $ξ \left(x\right) = log \left(1+{e}^{x}\right)$
wobei x die Merkmalskarte der Eingabe ist, *tanh*(*x*) die hyperbolische Tangensfunktion ist und ξ(*x*) eine Exponentialfunktion mit der Basis e ist; wobei die Größe des Faltungskerns in der Faltungsschicht 1 × 1 beträgt, die Anzahl 32 beträgt und die Schrittweite 1 × 1 beträgt; wobei die Eingabedaten eine Distanzmerkmalskarte der Größe C × H × W nach Merkmalstransformation und Vorverarbeitung sind, wobei C die Anzahl der Merkmalskanäle, hier 4, ist, H die Anzahl der Laserstrahlen in der vertikalen Richtung des LIDAR ist und W die Größe der horizontalen Winkelauflösung der Distanzmerkmalskarte ist; wobei der Encoder CSPDarkNet ist, aus einer Cross-Stage-Merkmalsfusionsschicht und einem Residualnetzwerk besteht und in fünf Sub-Encoder unterteilt ist, wobei jeder Sub-Encoder aus einer Downsampling-Schicht (DS), einer Cross-Stage-Merkmalsfusions-Residualschicht (CSP-RES) und einer Zufallsdeaktivierungsschicht (D) zusammengesetzt ist, wobei jede Downsampling-Schicht aus einer Faltungsschicht, einer Stapelnormalisierungsschicht und einer Mish-Aktivierungsfunktionsschicht (C(3 * 3/2)-BN-M) zusammengesetzt ist, die Größe der Faltungskerne 3 × 3 beträgt, die Schrittweite 1 × 2 beträgt, die Anzahl der Downsampling-Schichten in den fünf Sub-Encodern der Reihe nach [64, 128, 256, 512, 1024] beträgt und nach Durchlaufen der Downsampling-Schicht die Distanzmerkmalskarte in der H-Dimension unverändert bleibt, in der W-Dimension halbiert wird und in der C-Dimension um das Einfache erhöht wird, wodurch die Geschwindigkeit des nachfolgenden Merkmalsextraktionsvorgangs beschleunigt wird; wobei die Merkmalsextraktionsstruktur jedes Sub-Encoders aus einer Cross-Stage-Merkmalsfusions-Residualschicht (CSP-Res) zusammengesetzt ist, wobei der Unterschied in der Anzahl von Residualblöcken liegt, die in den fünf Sub-Encodern der Reihe nach jeweils [1, 2, 8, 8, 4] betragen, und die Cross-Stage-Merkmalsfusions-Residualschichten der fünf Sub-Encoder der Reihe nach aus [CSP-Res 1, CSP-Res 2, CSP-Res 8, CSP-Res 8, CSP-Res 4] zusammengesetzt sind, wodurch das Extrahieren tiefer Merkmale aus der downgesampleten Merkmalskarte ermöglicht wird; wobei die Zufalls-Dropout-Schicht (D) die extrahierte tiefe Merkmalskarte unter Verwendung einer Wahrscheinlichkeit P zufällig deaktiviert;
wobei der CSPDarkNet-Encoder, der fünf CSP-Res-Modulstrukturen umfasst, eine Cross-Stage-Merkmalsfusionsschicht (Partial Transition Layer) ist, ein hierarchischer Merkmalsfusionsmechanismus ist, das Konzept der Vorfusion und Nachfusion übernimmt, eine Gradientenfluss-Abschneidestrategie übernimmt, die Differenz der Gradientenkombination maximiert, um zu verhindern, dass Residualnetzwerke und andere Faltungsschichten wiederholte Gradienteninformationen lernen, und die Lernfähigkeit des Netzwerks theoretisch verbessert wird; wobei die konkreten Schritte wie folgt sind:
(11) Eingeben einer Merkmalskarte 2C * H * W durch eine linke Zweig-Faltungsschicht (C(C * 1 * 1)), wobei die Faltungskern-Größe 1 × 1 beträgt, die Schrittweite 1 × 1 beträgt und die Anzahl C beträgt, um eine Merkmalskarte C * H * W zu erhalten;
(12) Eingeben einer Merkmalskarte 2C * H * W durch eine rechte Zweig-Tiefenmerkmalsextraktionsschicht, die zwei Faltungsschichten (C(C * 1 * 1)) und ein gestapeltes Residualnetzwerk (Res * N) umfasst, wobei der konkrete Vorgang wie folgt ist:
(2a) Eingeben der Merkmalskarte 2C * H * W in eine erste Schicht einer Faltungsschicht (C(C * 1 * 1)), wobei die Größe des Faltungskerns 1 × 1 beträgt, die Schrittweite 1 × 1 beträgt und deren Anzahl C beträgt;
(2b) Eingeben des Ergebnisses von Schritt (2a) in eine zweite Schicht einer Residualnetzwerkstruktur (Res * N), wobei N Residualblöcke auf der Schicht gestapelt sind, wobei der konkrete Berechnungsvorgang jedes Residualblocks wie folgt ist:
(2b-1) Eingeben des Ergebnisses von Schritt (2a) in die erste Faltungsschicht (C * 1 * 1) des Residualblocks, wobei die Größe des Faltungskerns 1 × 1 beträgt, die Schrittweite 1 × 1 beträgt und deren Anzahl C beträgt;
(2b-2) Eingeben des Ergebnisses von Schritt (2b-1) in die zweite Faltungsschicht (C * 3 * 3) des Residualblocks, wobei die Größe des Faltungskerns 3 × 3 beträgt, die Schrittweite 1 × 1 beträgt und deren Anzahl C beträgt;
(2b-3) Addieren des Ergebnisses von Schritt (2b-2) zu dem Ergebnis von Schritt (2a);
(2b-4) Eingeben des Ergebnisses von Schritt (2b-3) in die nachfolgenden N - 1 Residualblöcke zur kontinuierlichen Operation; (13) Spleißen des Ergebnisses von Schritt (2b-4) mit dem Ergebnis von Schritt (11) auf dem ersten Kanal (Cat);
(14) Eingeben des Ergebnisses von Schritt (13) in die letzte Faltungsschicht (C(2C * 1 * 1)), um Merkmalsfusion durchzuführen, wobei die Faltungskern-Größe 1 × 1 beträgt, die Schrittweite 1 × 1 beträgt, deren Anzahl 2C beträgt und die endgültige Ausgabe-Merkmalskartengröße 2C * H * W beträgt;
wobei der Decoder aus fünf Sub-Decodern zusammengesetzt ist und jeder Sub-Decoder aus einem Upsampling-Modul (US) und einem Residualblock (Res) zusammengesetzt ist; wobei das Upsampling-Modul eine inverse Faltungsstruktur (ConvTransposed2d(4 * 4/2)) ist, die Größe des Faltungskerns 4 × 4 beträgt, dessen Schrittweite 2 beträgt und dessen Anzahl für die fünf Sub-Decoder der Reihe nach [1024, 512, 256, 128, 64] beträgt, wodurch das von dem Backbone-Encoder extrahierte Merkmal hochabgetastet wird, das heißt in der W-Dimension um das 32-Fache ansteigt, um die ursprüngliche Merkmalskartenauflösung H × W wiederherzustellen, und unmittelbar danach ein Residualblock (Res) folgt, um das Ergebnis zu verbessern; wobei gleichzeitig nach jedem Upsampling eine Sprungverbindung zwischen den Ausgaben unterschiedlicher Auflösungen des Encoders hinzugefügt wird, das heißt die Ausgabe des Decoders zu der Ausgabe des entsprechenden Encoders addiert wird, um einige beim Downsampling-Vorgang verlorene hochfrequente Kanteninformationen wiederherzustellen; und wobei in dem letzten Sub-Decoder eine Zufalls-Dropout-Schicht (D) hinzugefügt wird und die flache Merkmalskarte nach fünfmaligem Decodieren unter Verwendung der Wahrscheinlichkeit P zufällig deaktiviert wird, wobei P 0,05 beträgt;
wobei der Klassifiziererteil aus einer Faltungsschicht (Conv(N * 3 * 3/1)) und einer Exponentialnormalisierungsschicht (Softmax) zusammengesetzt ist; wobei die Faltungskern-Größe der Faltungsschicht 3 × 3 beträgt, deren Schrittweite 1 beträgt und deren Anzahl N beträgt, wobei N die Anzahl zweidimensionaler semantischer Tags ist; wobei dim = 0 in der Exponentialnormalisierungsschicht (Softmax) ist, das heißt eine Normalisierungsverarbeitung an der ersten Dimension durchgeführt wird und eine Wahrscheinlichkeitsverteilung der zweidimensionalen semantischen Kategorie an jedem Pixelpunkt ausgegeben wird.

3. Verfahren zur semantischen Segmentierung einer dreidimensionalen Laserradar-Punktwolke auf der Basis von Tiefenlernen nach Anspruch 1, wobei die in Schritt 2 beschriebene ursprüngliche Punktwolken-Merkmalstransformation mittels Koordinatensystemtransformation ein vierdimensionales Merkmal (φ, θ, d, r) als neues Merkmal erzeugt und die konkreten Operationsschritte wie folgt sind:
(21) Analysieren der LIDAR-Daten, um einen ursprünglichen LIDAR-Punktwolkenrahmen zu erhalten, wobei jede Rahmengröße n × 4 ist, wobei n eine Anzahl von Punktwolken in jedem Rahmen ist und 4 eine Merkmalsdimension jedes Punkts ist, das heißt [x, y, z, r], wobei (x, y, z) eine räumliche Positionsdarstellung der Punktwolke in einem dreidimensionalen kartesischen Koordinatensystem ist und r eine Reflexionsintensität eines Oberflächenmaterials eines Objekts ist, an dem sich die Punktwolke befindet;
(22) Transformieren von (x, y, z) in dem ursprünglichen LIDAR-Punktwolkenrahmen durch das Polarkoordinatensystem, um die räumliche Positionsdarstellung (φ, θ, d) in dem Polarkoordinatensystem zu erhalten, wobei φ der horizontale Ablenkwinkel in dem Polarkoordinatensystem ist, θ der vertikale Ablenkwinkel in dem Polarkoordinatensystem ist und d die Entfernung von dem Punkt zum Ursprung des Koordinatensystems ist; wobei die Transformation in das Polarkoordinatensystem wie in den folgenden Formeln (4) bis (6) gezeigt ist: $d = \sqrt{{x}^{2} + {y}^{2} + {z}^{2}}$ $θ = {cos}^{- 1} \frac{z}{\sqrt{{x}^{2} + {y}^{2} + {z}^{2}}}$ $φ = {tan}^{- 1} \frac{y}{x}$
Kombinieren des erhaltenen (φ, θ, d) mit r, um das ursprüngliche vierdimensionale Merkmal zu ersetzen und ein neues vierdimensionales Merkmal (φ, θ, d, r) zu erhalten;
wobei φ der Nickwinkel der Punktwolke in dem Polarkoordinatensystem ist, θ der Ablenkwinkel der Punktwolke in dem Polarkoordinatensystem ist, d das Distanzmerkmal von der Punktwolke zum Ursprung des Radarkoordinatensystems ist, und nach der Merkmalstransformation ein Vierfachmerkmal gebildet wird, das heißt (φ, θ, d, r), und r die Reflexionsintensität des Oberflächenmaterials des Objekts ist, an dem sich die Punktwolke befindet.

4. Verfahren zur semantischen Segmentierung einer dreidimensionalen Laserradar-Punktwolke auf der Basis von Tiefenlernen nach Anspruch 1, wobei das dreidimensionale Raummerkmal in Schritt 3 in ein zweidimensionales räumliches Merkmal umgewandelt wird, um eine strukturierte vierkanalige Distanzmerkmalskarte zu erzeugen, und die Hauptschritte wie folgt sind:
(31) Erhalten des Indexpaares (h, w) jedes Punkts unter Verwendung des räumlichen Positionsmerkmals (x, y, z) des kartesischen Koordinatensystems jedes Punkts in Kombination mit den Parametern des fahrzeugmontierten Laserradar, wobei h der Spaltenindex des Distanzbildes ist und w der Zeilenindex des Distanzbildes ist; wobei die sphärische Projektion in den folgenden Formeln (7) bis (9) gezeigt ist: $f = {f}_{down} + {f}_{up}$ $h = \left⌊H\left(1-\left(\frac{π}{2}-θ+{f}_{down}\right)/f\right)\right⌋$ $w = \left⌊W\left(\frac{1}{2}-φ/2π\right)\right⌋$ wobei f der Bereich des vertikalen Sichtfeldes des Laserradar ist, f_{down} die untere Grenze des vertikalen Sichtfeldes des Laserradar ist, fᵤₚ die obere Grenze des vertikalen Sichtfeldes des Laserradar ist, H die vertikale Auflösung der Distanzmerkmalskarte ist und im Allgemeinen ein Laserradar-Strahl ist, W die horizontale Auflösung der Distanzmerkmalskarte ist und $\left⌊⋅\right⌋$ die Abrundungsfunktion ist; wobei die Vierfachmerkmale und (h, w) aller Punktwolken des in Schritt 2 erhaltenen Einzelrahmens in absteigender Reihenfolge entsprechend dem Wert des Merkmals d sortiert werden; wobei die neu angeordneten Vierfachmerkmale jeweils durch (h, w) auf die entsprechenden zweidimensionalen Distanzmerkmalskarten abgebildet werden und die Merkmalskarten gespleißt und standardisiert werden, um eine Distanzmerkmalskarte mit einer Größe von [4 × H × W] zu erhalten, wobei H die vertikale Auflösung der Distanzmerkmalskarte ist und W die horizontale Auflösung der Distanzmerkmalskarte ist;
(32) Erhalten einer endgültigen Merkmalskarte unter Verwendung einer Standardisierungsverarbeitungsweise für eine Distanzmerkmalskarte mit einer Größe von 4 × H × W; wobei der Standardisierungsverarbeitungsvorgang in der folgenden Formel (10) gezeigt ist: ${x}_{i} = \frac{{x}_{i} - {μ}_{i}}{{σ}_{i}}$ wobei xᵢ ein Merkmalswert der Merkmalskarte auf jedem Merkmalskanal ist, µᵢ ein Merkmalsmittelwert auf dem entsprechenden Merkmalskanal ist und σᵢ eine Merkmalsvarianz auf dem entsprechenden Merkmalskanal ist; wobei das Verfahren eine Standardisierungsverarbeitung an jedem Merkmalskanal durchführt, um eine standardisierte vierkanalige Distanzmerkmalskarte zu erhalten;
(33) Anwenden des in Schritt (31) erhaltenen Indexpaares (h, w) und Verwenden der Markierungsabbildungstabelle für die ursprüngliche diskontinuierliche dreidimensionale semantische Markierung, zuerst Erzeugen einer kontinuierlichen Markierung durch Markierungsabbildung und dann Abbilden der kontinuierlichen Markierung auf das zweidimensionale Bild durch (h, w), um ein einkanaliges zweidimensionales semantisches Bild mit einer Größe von H × W zu erhalten; wobei zur Unterscheidung verschiedener Kategorien im Datenannotationsvorgang der reale Markierungsindex diskontinuierlich ist und die nachfolgende semantische Schlussfolgerungsstufe kontinuierliche reale Markierungen benötigt; wobei unterdessen für einige Szenen die einzelne semantische Kategorieszene nicht auftreten wird, und wenn das Modell die Merkmale solcher Markierungen lernt, es leicht ist, das Modell zu stören, und verhindert werden muss, dass das Modell die Interferenzkategorieinformationen übermäßig lernt; wobei daher solche Markierungen mit bestehenden Markierungen abgebildet werden müssen, um Markierungszusammenführung und Kontinuität zu implementieren; wobei der Markierungszusammenführungsvorgang wie folgt ausgedrückt wird:
*label_{mapped}*←*index*[*label_{origin}*]label_{mapped} ist eine abgebildete Markierung, label_{origin} ist eine ursprüngliche Markierung, und Index ist ein Abbildungsbeziehungswörterbuch; wobei die Eingabe wie folgt ist: 1 × N ursprüngliche Punktwolkenmarkierung label_{origin}, wobei N die Anzahl von Punktwolken ist; die Anzahl von Kategorien n_{class}; und das Abbildungsbeziehungswörterbuch in der folgenden Form:
*map_dict:key* ∈ (0,*max*(*origin_{label}*), *value* ∈ (0,*n_{class}*)wobei map_dict das Abbildungswörterbuch ist, key der Schlüssel des Wörterbuchs ist, value der Wert des Wörterbuchs ist, origin_{label} der ursprüngliche Markierungsindexwert ist und max() die Maximumwertfunktion ist; wobei das endgültige Ausgaberesultat als die abgebildete einkanalige zweidimensionale semantische Graphmarkierung label_{mapped} erhalten wird.

5. Verfahren zur semantischen Segmentierung einer dreidimensionalen Laserradar-Punktwolke auf der Basis von Tiefenlernen nach Anspruch 1, wobei bei dem Vorgang des Trainierens des leichtgewichtigen vollfaltungsbasierten neuronalen Netzwerks in Schritt 4 die Verlustfunktion den gewichteten Kreuzentropieverlust kombiniert mit dem Modellstrukturverlust verwendet; und wobei bei dem Zufallsgradientenabstieg ein Vorwärm-Lernratenmechanismus verwendet wird, um die Lernrate dynamisch anzupassen, wodurch Konvergenzeffizienz und Genauigkeit verbessert werden; wobei die Verlustfunktion den Formeln (11) bis (14) entspricht: $L 1 = - {\sum }_{c = 0}^{N} {w}_{c} {y}_{c} log \left(\hat{{y}_{c}}\right)$ ${w}_{c} = \left\{\begin{matrix}0 , & c = 0 \\ \frac{1}{{f}_{c} + ϵ} , & other\end{matrix}\right.$ $L 2 = \frac{α}{2} {\left‖w\right‖}_{2}^{2}$ $loss = L 1 + L 2$
wobei 1 der gewichtete Kreuzentropieverlust ist, C die Kategoriemarkierung ist, w_{c} das Gewicht der Kategorie C ist, N die Anzahl von Kategoriemarkierungen ist,
$\hat{{y}_{c}}$ ein Wahrscheinlichkeitsschätzwert von C der Markierung ist, nachdem die Trainingssatzprobe einer Modellschlussfolgerung unterzogen wurde, und y_{c} ein wahrer Wahrscheinlichkeitswert von C ist, der durch die obigen Proben markiert ist; wobei f_{c} der Anteil von Proben der Kategorie C an den Gesamtproben ist und ε ein Biasbetrag ist;
wobei 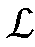 2 ein Strukturverlust des Modells ist, α ein Proportionalitätskoeffizient des Verlusts ist, w ein eindimensionaler Vektor ist, der aus allen Parametern des Modells zusammengesetzt ist, ${\left‖⋅\right‖}_{2}^{2}$ eine Zweiernorm ist und loss der Gesamtverlust des Modells ist.

6. Verfahren zur semantischen Segmentierung einer dreidimensionalen Laserradar-Punktwolke auf der Basis von Tiefenlernen nach Anspruch 1, wobei die in Schritt 5 beschriebene zweidimensionale semantische Punktwolkensegmentierung wie folgt ist: nachdem die ursprüngliche Punktwolke in den Schritten 2, 3 und 4 vorverarbeitet wurde, wird die ursprüngliche Punktwolke in ein leichtgewichtiges tiefes vollfaltungsbasiertes neuronales Netzwerk zur punktweisen Schlussfolgerung eingegeben, um eine zweidimensionale räumliche semantische Markierung zu erhalten.

7. Verfahren zur semantischen Segmentierung einer dreidimensionalen Laserradar-Punktwolke auf der Basis von Tiefenlernen nach Anspruch 1, wobei in dem in Schritt 6 beschriebenen Schiebefenster-Abstimmungsmechanismus auf der Basis einer zweidimensionalen Matrix für jeden Pixelpunkt in dem in Schritt 5 erhaltenen zweidimensionalen semantischen Markierungsbild ein Pixelpunkt in dem Bereichsumfang entsprechend dem Distanzschwellenwert bestimmt wird, eine Abstimmung entsprechend der Markierung durchgeführt wird und eine globale Korrektur an der zweidimensionalen semantischen Markierung durchgeführt wird; wobei, da die Operation an jedem Punkt in der zweidimensionalen Matrix unabhängig ist, eine Grafikverarbeitungseinheit (GPU) zur parallelen Berechnung verwendet werden kann, um den Operationsvorgang zu beschleunigen.

8. Verfahren zur semantischen Segmentierung einer dreidimensionalen Laserradar-Punktwolke auf der Basis von Tiefenlernen nach Anspruch 1, wobei in Schritt 7 die dreidimensionale semantische Markierung wiederhergestellt wird, die Markierungsrückabbildungstabelle verwendet wird, die in Schritt 6 erhaltene optimierte zweidimensionale semantische Markierung zurück in den dreidimensionalen semantischen Raum abgebildet wird und schließlich ein vollständiger Punktwolkenrahmen mit einer dreidimensionalen semantischen Markierung erhalten wird.

9. Vorrichtung zur semantischen Segmentierung einer dreidimensionalen Laserradar-Punktwolke auf der Basis von Tiefenlernen, umfassend:
ein Erhaltungsmodul, das dazu eingerichtet ist, ursprüngliche Punktwolkendaten zu erhalten; und ein Eingabemodul, das dazu eingerichtet ist, die ursprünglichen Punktwolkendaten vorzuverarbeiten und ein vorverarbeitetes Merkmal jedes Punkts in den Punktwolkendaten durch eine erste Faltungsschicht zu extrahieren; und
ein Encodierungsmodul, das dazu eingerichtet ist, Merkmalsextraktion und Downsampling an einem Eingabe-Punktwolkenmerkmal unter Verwendung einer voreingestellten Anzahl von Encodierungsschichten durchzuführen, um eine Zwischenmerkmalskarte zu erhalten, die jeder Encodierungsschicht entspricht, wobei die Encodierungsschicht ein Downsampling-Modul, ein Cross-Stage-Merkmalsfusions-Residualmodul und ein Zufallsdeaktivierungsmodul umfasst;
ein Decodierungsmodul, das dazu eingerichtet ist, Merkmalsdecodierung und Upsampling an der Zwischenmerkmalsabbildung unter Verwendung einer voreingestellten Anzahl von Decodierungsschichten durchzuführen, um eine Up-sampling-Merkmalsabbildung zu erhalten, die jeder Decodierungsschicht entspricht, wobei die Decodierungsschicht ein Upsampling-Modul und ein Residualmodul umfasst;
ein Klassifizierungsmodul, das dazu eingerichtet ist, eine globale Zusammenfassung an durch die Decodierungsschicht erzeugten Zwischenmerkmalskarten durchzuführen und eine punktweise zweidimensionale semantische Klassifizierung unter Verwendung globaler Merkmale durchzuführen; und
ein Abbildungsmodul, das dazu eingerichtet ist, die durch das Klassifizierungsmodul erzeugten zweidimensionalen semantischen Tags zurück in einen dreidimensionalen Raum abzubilden, um ein dreidimensionales semantisches Tag zu erzeugen;
ein Ausgabemodul, das dazu eingerichtet ist, die punktweisen dreidimensionalen semantischen Markierungen, die durch das Abbildungsmodul ausgegeben werden, rahmenweise zusammenzufassen und die dreidimensionalen semantischen Rahmen auszugeben.

10. Elektronische Vorrichtung und Medium, umfassend: einen Laserradar, einen Prozessor, ein entfernbares Speichermedium, einen Kommunikationsteil, einen fahrzeugmontierten Rechencluster, einen Speicher und ein in dem Speicher gespeichertes Computerprogramm; wobei der Laserradar ein rotierender Laserradar ist und der horizontale Sichtwinkelbereich 360° beträgt; wobei, wenn der Prozessor das Programm ausführt, das Verfahren zur semantischen Segmentierung einer dreidimensionalen Laserradar-Punktwolke auf der Basis von Tiefenlernen nach einem der Ansprüche 1 bis 4 implementiert wird; wobei der fahrzeugmontierte Rechencluster ein Grafikprozessor (GPU) Cluster ist, um den Trainings- und Schlussfolgerungsvorgang nach einem der Ansprüche 2 bis 4 zu implementieren;
wobei die folgende externe elektronische Vorrichtung und das folgende Medium mit einer Eingabe/Ausgabe-Schnittstelle (IO-Schnittstelle) verbunden sind: einschließlich eines Festkörper-, Halbfestkörper- oder mechanischen rotierenden Laserradar, der Informationen in einer Umgebung erfassen kann, um ursprüngliche Punktwolkendaten als nachfolgende Modelleingabe zu erzeugen; wobei ein Kommunikationsteil einer Netzwerkschnittstellenkarte, wie etwa einer LAN-Karte, eines Modems usw., eine Kommunikationsverarbeitung über ein Netzwerk wie das Internet durchführen kann; wobei ein entfernbares Speichermedium wie etwa eine Magnetplatte, eine optische Platte, eine magnetooptische Platte, ein Halbleiterspeicher usw. das darin gespeicherte Computerprogramm nach Bedarf von der I/O-Schnittstelle liest oder einen dauerhaft zu speichernden semantischen Segmentierungsergebnis-Datenrahmen dorthin schreibt; wobei die folgenden internen elektronischen Vorrichtungen und Medien umfassen: eine zentrale Prozessoreinheit (CPU), die verschiedene Anweisungen und Aktionen gemäß einem in einem Nur-Lese-Speicher (ROM) gespeicherten und in einen Direktzugriffsspeicher (RAM) geladenen Programm ausführen kann;
wobei in dem RAM auch verschiedene Programme und Daten gespeichert sind, die für den Betrieb der Vorrichtung erforderlich sind; wobei der fahrzeugmontierte Rechencluster dafür verantwortlich ist, Anweisungen von der CPU und Daten von dem ROM zu empfangen und großskalige parallele Datenberechnung durchzuführen, wobei insbesondere der fahrzeugmontierte Grafikprozessor (GPU) Cluster über einen computerinternen Hochgeschwindigkeitsbus (PCI-E) verbunden ist; und wobei die CPU, der fahrzeugmontierte Rechencluster, der ROM und der RAM über einen Bus miteinander verbunden sind; wobei die I/O-Schnittstelle ebenfalls mit dem Bus verbunden ist.

11. Speichermedium nach Anspruch 10, wobei das Speichermedium ein in der Vorrichtung nach Anspruch 10 enthaltenes Speichermedium sein kann oder alleine vorhanden sein kann und nicht als Speichermedium in der Vorrichtung montiert ist; wobei das Speichermedium ein oder mehrere Programme speichert und das vorstehende Programm durch einen oder mehrere Prozessoren verwendet wird, um das in der vorliegenden Offenbarung beschriebene Verfahren zur semantischen Segmentierung einer dreidimensionalen Laserradar-Punktwolke auf der Basis von Tiefenlernen auszuführen, einschließlich dauerhafter und nicht dauerhafter, beweglicher und nicht entfernbarer Medien, die Informationsspeicherung durch ein beliebiges Verfahren oder eine beliebige Technologie implementieren können; wobei die Informationen Computeranweisungen, Programmmodule oder Rohdaten, Ergebnisdaten und andere Daten sein können; wobei Beispiele von Computerspeichermedien Phasenwechselspeicher (PRAM), statischen Direktzugriffsspeicher (SRAM), dynamischen Direktzugriffsspeicher (DRAM), andere Arten von Direktzugriffsspeicher (RAM), Nur-Lese-Speicher (ROM), elektrisch löschbaren programmierbaren Nur-Lese-Speicher (EEPROM), Flash-Speicher oder andere Speichertechnologie oder andere optische Speicher, magnetische Speicher oder Informationen umfassen, die zum Speichern von Informationen verwendet werden können, auf die durch eine Rechenvorrichtung zugegriffen werden kann, ohne darauf beschränkt zu sein.

## Revendications

1. Procédé de segmentation sémantique de nuage de points de radar laser tridimensionnel basé sur l'apprentissage profond, comprenant les étapes suivantes :
étape 1 : construction d'un réseau neuronal entièrement convolutif profond léger ; construction d'un réseau neuronal entièrement convolutif pour l'apprentissage, composé de trois parties, à savoir un codeur, un décodeur et un classificateur ;
étape 2 : réalisation d'une transformation de caractéristiques sur le nuage de points d'origine du radar laser ; obtention d'un ensemble de données de nuage de points tridimensionnel d'origine à partir du radar laser, puis réalisation d'une réduction de dimension afin de former quatre dimensions de caractéristiques après transformation et assemblage des caractéristiques ;
étape 3 : conversion de la caractéristique spatiale tridimensionnelle en une caractéristique spatiale bidimensionnelle, et prétraitement de la caractéristique spatiale bidimensionnelle ; génération d'une carte de caractéristiques de distance à quatre canaux structurée à partir de la caractéristique désordonnée selon une projection sphérique ; génération d'une image sémantique bidimensionnelle à canal unique à partir de l'étiquette de séquence, conversion de l'image sémantique bidimensionnelle à canal unique en un format correspondant au format requis par les données prétraitées, prétraitement des données, puis division de l'échantillon de données prétraitées en un ensemble d'entraînement et un ensemble de test ;
étape 4 : entraînement d'un réseau neuronal entièrement convolutif profond léger ; utilisation de la carte de caractéristiques de nuage de points de l'ensemble d'entraînement comme échantillon d'entraînement, prise en compte de la carte sémantique de nuage de points comme étiquette de valeur réelle, entraînement d'un réseau neuronal de segmentation sémantique entièrement convolutif profond à l'aide d'un procédé de rétropropagation et de descente de gradient aléatoire, et enfin, obtention d'un paramètre de modèle optimisé en minimisant une fonction de perte ;
étape 5 : réalisation d'une segmentation sémantique sur le nuage de points bidimensionnel ; entrée du nuage de points d'origine dans un cadre de segmentation sémantique bidimensionnelle afin d'obtenir une étiquette sémantique spatiale bidimensionnelle ;
étape 6 : réalisation d'une optimisation post-traitement sur l'étiquette sémantique bidimensionnelle ; utilisation d'un mécanisme de vote par fenêtre glissante sur la base d'une matrice bidimensionnelle et utilisation des caractéristiques de cohérence de densité de nuage de points interne et d'invariance de rotation et de translation d'un seul objet, et réalisation d'une correction globale des erreurs d'étiquetage causées par un faible volume de données d'une seule catégorie de trames de nuages de points, et des nuages de points épars en raison d'un échantillonnage à longue distance et une limite sémantique floue ;
étape 7 : récupération de l'étiquette sémantique tridimensionnelle ; réintégration du résultat d'étiquette après la segmentation sémantique bidimensionnelle dans l'espace sémantique de nuage de points tridimensionnel d'origine afin d'obtenir des trames de nuage de points complètes dotées d'une étiquette sémantique tridimensionnelle.

2. Procédé de segmentation sémantique de nuage de points de radar laser tridimensionnel basé sur l'apprentissage profond selon la revendication 1, dans lequel le réseau entièrement convolutif profond léger décrit à l'étape 1 comprend une couche d'entrée, un codeur CSPDarkNet mettant en œuvre une stratégie de réseau partiel inter-étages (CSP) et une structure résiduelle, un codeur basé sur une structure de déconvolution, ainsi qu'un classificateur pour une classification pixel par pixel, constituant un réseau de segmentation de nuages de points, abrégé en CSPRangeNet ; l'entrée est une image de distance de nuage de points bidimensionnelle multicanal prétraitée, et la sortie est une étiquette sémantique bidimensionnelle correspondant à chaque pixel de l'image de distance.
La couche d'entrée est composée d'une couche convolutive-une couche de normalisation de lot-une couche de fonction d'activation Mish (Conv-Bn-M). La fonction d'activation Mish est représentée par la formule (1-3) suivante : $Mish \left(x\right) = x \times tanh \left(ξ\left(x\right)\right)$ $tanh \left(x\right) = \frac{{e}^{x} - {e}^{- x}}{{e}^{x} + {e}^{- x}}$ $ξ \left(x\right) = log \left(1+{e}^{x}\right)$
où x est la carte de caractéristiques de l'entrée, tanh(x) est la fonction tangente hyperbolique et ξ(x) est une fonction exponentielle de base e. La taille du noyau de convolution dans la couche de convolution est de 1×1, le nombre est de 32 et la taille de pas est de 1×1. Les données d'entrée sont une carte de caractéristiques de distance de taille C×H×W après transformation et prétraitement des caractéristiques, où C est le nombre de canaux de caractéristiques (ici 4), H est le nombre de faisceaux laser dans la direction verticale du LIDAR, et W est la taille de la résolution angulaire horizontale de la carte de caractéristiques de distance.
Le codeur est un CsPDarkNet, se compose d'une couche de fusion de caractéristiques inter-étages et d'un réseau résiduel ; il est divisé en cinq sous-codeurs, chacun des sous-codeurs étant constitué d'une couche de sous-échantillonnage (DS), d'une couche résiduelle de fusion de caractéristiques inter-étages (CSP-RES) et d'une couche d'inactivation aléatoire (D), chaque couche de sous-échantillonnage étant composée d'une couche convolutive-une couche de normalisation de lot-une couche de fonction d'activation Mish (C (3 * 3/2)-BN-M), la taille des noyaux de convolution est de 3×3, la longueur de pas est de 1×2, le nombre de couches de sous-échantillonnage dans les cinq sous-codeurs est de [64, 128, 256, 512,1 024] respectivement, et après avoir traversé la couche de sous-échantillonnage, la carte de caractéristiques de distance reste inchangée dans la dimension H, est réduite de moitié dans la dimension W et augmentée d'une fois dans la dimension C, ce qui accélère ainsi la vitesse de l'opération d'extraction de caractéristiques suivante ; la structure d'extraction de caractéristiques de chaque souscodeur est composée d'une couche résiduelle de fusion de caractéristiques inter-étages (CSP-Res) ; la différence est le nombre de blocs résiduels, qui sont [1, 2, 8, 8, 4] respectivement dans l'ordre dans les cinq sous-codeurs, et les couches résiduelles de fusion de caractéristiques inter-étages des cinq sous-codeurs composés sont [CSP-Res 1, CSP-Res 2, CSP-Res 8, CSP-Res 8, CSP-Res 4] dans l'ordre, ce qui permet l'extraction de caractéristiques profondes à partir de la carte de caractéristiques sous-échantillonnée ; la couche de désactivation aléatoire (D) désactive de manière aléatoire la carte de caractéristiques profondes extraite en utilisant la probabilité P.
Le codeur CSPDarknet, qui comprend cinq structures de module CSP-Res, est une couche de fusion de caractéristiques inter-étages (couche de transition partielle), est un mécanisme de fusion de caractéristiques hiérarchique, adopte l'idée de pré-fusion et de post-fusion, adopte une stratégie de troncature de flux de gradient, maximise la différence entre les combinaisons de gradients afin d'empêcher les réseaux résiduels et autres couches de convolution d'apprendre des informations de gradient redondantes, ce qui améliore théoriquement la capacité d'apprentissage du réseau. Les étapes spécifiques sont les suivantes :
(11) entrée d'une carte de caractéristiques 2C * H * W à travers une couche convolutive de branche gauche (C(C*1* 1)), où la taille de noyau de convolution est de 1×1, la longueur de pas est de 1×1 et le nombre est C, afin d'obtenir une carte de caractéristiques de taille C * H * W ;
(12) entrée d'une carte de caractéristiques 2C * H * W\ à travers une couche d'extraction de caractéristiques de profondeur de branche droite, comprenant deux couches convolutives (C(C*1* 1)) et un réseau résiduel empilé (Res * N) ; le processus spécifique est le suivant :
(2a) entrée de la carte de caractéristiques 2C * H * W dans la première couche d'une couche convolutive C(C*1* 1), où la taille de noyau de convolution est de 1×1, la taille de pas est de 1×1 et le nombre est C.
(2b) entrée du résultat de l'étape (2a) dans une seconde couche d'une structure de réseau résiduel (Res * N), où N blocs résiduels sont empilés sur la couche. Le processus de calcul spécifique à chaque bloc résiduel est le suivant :
(2b-1) entrée du résultat de l'étape (2a) dans la première couche convolutive (C * 1 * 1) du bloc résiduel, où la taille du noyau de convolution est de 1×1, la taille de pas est de 1×1 et le nombre est C.
(2b-2) entrée du résultat de l'étape (2 b-1) dans la seconde couche convolutive (C * 3 * 3) du bloc résiduel, où la taille de noyau de convolution est de 3×3, la taille de pas est de 1×1 et le nombre est C.
(2b-3) ajout du résultat de l'étape (2b-2) au résultat de l'étape (2a).
(2b-4) entrée du résultat de l'étape (2b-3) dans les N - 1 blocs résiduels suivants pour une opération continue.
(13) assemblage du résultat de l'étape (2b-4) avec le résultat de l'étape (11) sur le premier canal (Cat) ;
(14) entrée du résultat de l'étape (13) dans la dernière couche de convolution (C (2C * 1 * 1)) afin d'effectuer une fusion de caractéristiques, où la taille du noyau de convolution est de 1×1, la taille de pas est de 1×1, le nombre est 2C, et la taille finale de la carte de caractéristiques de sortie est 2C * H * W.
Le décodeur est composé de cinq sous-décodeurs, et chaque sous-décodeur est constitué d'un module de suréchantillonnage (US) et d'un bloc résiduel (Res). Dans lequel, le module de suréchantillonnage est une structure de convolution inverse (ConvTransposed2d(4*4/2)), la taille de noyau de convolution est de 4×4, la longueur de pas est de 2, et le nombre dans les cinq sous-décodeurs est [1024, 512, 256, 128, 64] dans l'ordre, ce qui effectue un suréchantillonnage de la caractéristique extraite par le codeur principal, c'est-à-dire qui augmente de 32 fois la dimension W afin de rétablir la résolution d'origine de la carte de caractéristiques H × W, et immédiatement suivi d'un bloc résiduel (Res) pour améliorer le résultat ; parallèlement, après chaque suréchantillonnage, une connexion de saut est ajoutée entre les sorties des différentes résolutions du codeur ; c'est-à-dire que la sortie du décodeur est ajoutée à la sortie du codeur correspondant afin de récupérer certaines informations de contours à haute fréquence perdues lors du processus de sous-échantillonnage ; et dans le dernier sous-décodeur, une couche de désactivation aléatoire (D) est ajoutée, et la carte de caractéristiques peu profonde après cinq décodages est désactivée de manière aléatoire selon une probabilité P, où P est égal à 0,05.
La partie classificatrice est composée d'une couche convolutive (Conv(N*3*3/1)) et d'une couche de normalisation exponentielle (Softmax). La taille du noyau de convolution de la couche de convolution est de 3×3, la longueur de pas est de 1 et le nombre est N, où N correspond au nombre de balises sémantiques bidimensionnelles ; dim = 0 dans la couche de normalisation exponentielle (Softmax), c'est-à-dire que le traitement de normalisation est effectué sur la première dimension, et qu'une distribution de probabilité de la catégorie sémantique bidimensionnelle est délivrée en sortie pour chaque pixel.

3. Procédé de segmentation sémantique de nuage de points de radar laser tridimensionnel basé sur l'apprentissage profond selon la revendication 1, dans lequel la transformation de caractéristiques de nuage de points d'origine décrite à l'étape 2 génère une caractéristique à quatre dimensions (Ψ · θ · d · r) au moyen d'une transformation de système de coordonnées, en tant que nouvelle caractéristique, et les étapes opérationnelles spécifiques sont les suivantes :
(21) Analyse des données lidar afin d'obtenir une trame de nuage de points lidar d'origine, où chaque taille de trame est de n × 4, où n est une quantité de nuages de points dans chaque trame, 4 est une dimension de caractéristique de chaque point, c'est-à-dire [x, y, z, r], où (x, y, z) est une représentation de position spatiale du nuage de points dans un système de coordonnées cartésiennes tridimensionnel, et r est à une intensité de réflexion du matériau de surface d'un objet où le nuage de points est situé.
(22) (x, y, z) dans la trame de nuage de points lidar d'origine est transformée par le système de coordonnées polaires afin d'obtenir la représentation de position spatiale (Ψ · θ · d) dans le système de coordonnées polaires, où Ψ est l'angle de déviation horizontale dans le système de coordonnées polaires, θ est l'angle de déviation verticale dans le système de coordonnées polaires, et d est la distance entre le point et l'origine du système de coordonnées. Le système de coordonnées polaires est transformé comme indiqué dans la formule (4-6) suivante : $d = \sqrt{{x}^{2} + {y}^{2} + {z}^{2}}$ $θ = {cos}^{- 1} \frac{z}{\sqrt{{x}^{2} + {y}^{2} + {z}^{2}}}$ $φ = {tan}^{- 1} \frac{y}{x}$
en combinant les (Ψ · θ · d) obtenues avec r afin de remplacer la caractéristique quadridimensionnelle d'origine et d'obtenir ainsi une nouvelle caractéristique quadridimensionnelle (Ψ · θ · d · r) ;
où Ψ est l'angle de pas du nuage de points dans le système de coordonnées polaires, θ est l'angle de déviation du nuage de points dans le système de coordonnées polaires, d est la caractéristique de distance entre le nuage de points et l'origine du système de coordonnées radar, et après la transformation de caractéristiques, on obtient une caractéristique quadruple, à savoir (Ψ, θ, d, r), et r est l'intensité de réflexion du matériau de surface de l'objet où le nuage de points est situé.

4. Procédé de segmentation sémantique d'un nuage de points de radar laser tridimensionnel basé sur l'apprentissage profond selon la revendication 1, dans lequel la caractéristique spatiale tridimensionnelle de l'étape 3 est convertie en une caractéristique spatiale bidimensionnelle afin de générer une carte de caractéristiques de distance à quatre canaux structurée, et les principales étapes sont les suivantes :
(31) La paire d'indices (h, w) de chaque point est obtenue en utilisant la caractéristique de position spatiale (x, y, z) du système de coordonnées cartésiennes de chaque point en combinaison avec les paramètres du radar laser monté sur un véhicule ; h est l'indice de colonne de l'image de distance, et w est l'indice de ligne de l'image de distance ; et la projection sphérique est représentée par les formules (7 à 9) suivantes : $f = {f}_{down} + {f}_{up}$ $h = \left⌊H\left(1-\left(\frac{π}{2}-θ+{f}_{down}\right)/f\right)\right⌋ {f}_{down}$ $w = \left⌊W\left(\frac{1}{2}-φ/2π\right)\right⌋$
où f est la portée du champ de vision vertical du rader laser, f_{down} est la limite inférieure du champ de vision vertical du radar laser, fᵤₚ est la limite supérieure du champ de vision vertical du radar laser, H est la résolution verticale de la carte de caractéristiques de distance, et est généralement un faisceau de radar laser, W est la résolution horizontale de la carte de caractéristiques de distance,
$\left⌊.\right⌋$ est la fonction d'arrondi vers le bas, les caractéristiques quadruples et (h, w) de tous les nuages de points de la seule trame obtenue à l'étape 2 sont triés par ordre décroissant en fonction de la valeur de la caractéristique d ; les caractéristiques quadruples réorganisées sont respectivement mappées sur les cartes de caractéristiques de distance bidimensionnelles correspondantes à travers (h, w), puis les cartes de caractéristiques sont assemblées et normalisées pour obtenir une carte de caractéristiques de distance de taille [4 × H × W], où H est la résolution verticale de la carte de caractéristiques de distance, et W est la résolution horizontale de la carte de caractéristiques de distance ;
(32) Une carte de caractéristiques finale est obtenue en utilisant une méthode de traitement normalisée pour une carte de caractéristiques de distance de taille 4 × H × W. Le processus de traitement normalisé est représenté par la formule (10) suivante : ${x}_{i} = \frac{{x}_{i} - {μ}_{i}}{{σ}_{i}}$
où xᵢ est une valeur de caractéristique de la carte de caractéristiques sur chaque canal de caractéristiques, µi est une valeur moyenne de caractéristiques sur le canal de caractéristiques correspondant, et σᵢ est une variance de caractéristiques sur le canal de caractéristiques correspondant ; et le procédé effectue un traitement de normalisation sur chaque canal de caractéristiques afin d'obtenir une carte de caractéristiques de distance à quatre canaux normalisée.
(33) Appliquer la paire d'indices (h, w) obtenue à l'étape (31) et utiliser la table de mappage d'étiquette pour l'étiquette sémantique tridimensionnelle discontinue d'origine, générer tout d'abord une étiquette de continuité à travers le mappage d'étiquette, puis mapper l'étiquette de continuité avec l'image bidimensionnelle à travers (h, w), afin d'obtenir une image sémantique bidimensionnelle monocanal de taille H × W. Afin de distinguer différentes catégories lors du processus d'annotation de données, l'index des étiquettes réelles est discontinu, et l'étape de raisonnement sémantique suivante nécessite des étiquettes réelles continues ; par ailleurs, dans certaines scènes, la scène de catégorie sémantique individuelle n'apparaîtra pas, et si le modèle apprend les caractéristiques de telles étiquettes, il devient facile d'interférer avec le modèle, il faut donc empêcher le modèle de surapprendre les informations relatives à la catégorie d'interférence. Par conséquent, de telles étiquettes doivent être mappées avec des étiquettes existantes afin de mettre en œuvre la fusion et la continuité des étiquettes ; le processus de fusion des étiquettes est représenté comme suit : ${label}_{mapped} ← index \left[{label}_{origin}\right]$
label_{mapped} est une étiquette mappée, label_{origin} est une étiquette d'origine et Index est un dictionnaire de relations de mappage. L'entrée est comme suit : 1 × N nuages de points d'origine étiquetés (label_{origin}), où N est le nombre de nuages de points ; le nombre de catégories n_{class} ; et le dictionnaire de relations de mappage se présente sous la forme suivante : $map_dict : key ∈ \left(0, max\left({origin}_{label}\right), value∈\left(0, {n}_{class}\right)\right.$
où map_dict est le dictionnaire de mappage, key est la clé du dictionnaire, value est la valeur du dictionnaire, originl_{abel} est la valeur d'indice d'étiquette d'origine, et max() est la fonction de valeur maximale. Le résultat de sortie final est obtenu en tant que graphe sémantique bidimensionnel monocanal mappé label_{mapped.}

5. Procédé de segmentation sémantique de nuage de points de radar laser tridimensionnel basé sur l'apprentissage profond selon la revendication 1, dans lequel, lors du processus d'entraînement du réseau neuronal entièrement convolutif léger à l'étape 4, la fonction de perte utilise la perte d'entropie croisée de poids combinée à la perte de structure de modèle ; et, dans la descente de gradient aléatoire, un mécanisme de préchauffage de taux d'apprentissage est utilisé pour ajuster dynamiquement le taux d'apprentissage, améliorant ainsi l'efficacité et la précision de la convergence. La fonction de perte est représentée par les formules (11 à 14) : $L 1 = - {\sum }_{c = 0}^{N} {w}_{c} {y}_{c} log \left(\hat{{y}_{c}}\right)$ ${w}_{c} = \left\{\begin{matrix}0 , & c = 0 \\ \frac{1}{{f}_{c} + ϵ} , & other\end{matrix}\right. other$$L 2 = \frac{α}{2} {\left‖w\right‖}_{2}^{2}$ $loss = L 1 + L 2$
Où 1 est la perte d'entropie croisée de poids, C est l'étiquette de catégorie, *w_{c}* est le poids de la catégorie C, et N est le nombre d'étiquettes de catégorie,
*ŷ_{c}* est une valeur d'estimation de probabilité de C de l'étiquette après que l'échantillon de l'ensemble d'entraînement a été soumis au raisonnement de modèle, et *y_{c}* est une valeur de probabilité réelle de C étiquetée par les échantillons susmentionnés ; *_{fc}* est la proportion d'échantillons de la catégorie C par rapport au nombre total d'échantillons, et ∈ est une quantité de biais ;
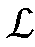 2 est une perte de structure du modèle binaire, a est un coefficient de proportionnalité de la perte, *w* est un vecteur unidimensionnel composé de tous les paramètres du modèle, $\left‖⋅\right‖ \frac{2}{2}$ est une double norme ; Loss est la perte totale du modèle.

6. Procédé de segmentation sémantique de nuage de points de radar laser tridimensionnel basé sur l'apprentissage profond selon la revendication 1, dans lequel la segmentation sémantique de nuage de points bidimensionnel décrite à l'étape 5 se déroule comme suit : après le prétraitement du nuage de points d'origine aux étapes 2, 3 et 4, le nuage de points d'origine est entré dans un réseau neuronal entièrement convolutif profond léger pour un raisonnement point par point, de manière à obtenir une étiquette sémantique spatiale bidimensionnelle.

7. Procédé de segmentation sémantique de nuage de points de radar laser tridimensionnel basé sur l'apprentissage profond selon la revendication 1, dans lequel, dans le mécanisme de vote par fenêtre glissante basé sur une matrice bidimensionnelle décrit à l'étape 6, un point de pixel dans la plage du domaine est déterminé en fonction du seuil de distance pour chaque point de pixel de l'image d'étiquettes sémantiques bidimensionnelle obtenue à l'étape 5, un vote est effectué en fonction de l'étiquette, et une correction globale est réalisée sur l'étiquette sémantique bidimensionnelle ; comme l'opération sur chaque point de la matrice bidimensionnelle est indépendante, un processeur graphique (GPU) peut être utilisé pour effectuer des calculs en parallèle afin d'accélérer le processus d'opération.

8. Procédé de segmentation sémantique de nuage de points de radar laser tridimensionnel basé sur l'apprentissage profond selon la revendication 1, dans lequel à l'étape 7, l'étiquette sémantique tridimensionnelle est récupérée, la table de correspondance des étiquettes est utilisée, l'étiquette sémantique bidimensionnelle optimisée obtenue à l'étape 6 est réintégrée dans l'espace sémantique tridimensionnel, et enfin, on obtient une trame de nuage de points complète avec une étiquette sémantique tridimensionnelle.

9. Appareil de segmentation sémantique de nuage de points de radar laser tridimensionnel basé sur l'apprentissage profond, comprenant :
un module d'obtention, configuré pour obtenir des données de nuage de points d'origine ; et
un module d'entrée, configuré pour prétraiter les données de nuage de points d'origine et extraire une caractéristique prétraitée de chaque point des données de nuage de points à travers une première couche convolutive ; et
un module de codage, configuré pour effectuer une extraction de caractéristiques et un sous-échantillonnage sur une caractéristique de nuage de points d'entrée en utilisant un nombre prédéfini de couches de codage, afin d'obtenir une carte de caractéristiques intermédiaire correspondant à chaque couche parmi les couches de codage, chaque couche de codage comprenant un module de sous-échantillonnage, un module résiduel de fusion de caractéristiques inter-étages et un module de désactivation aléatoire ;
un module de décodage, configuré pour effectuer le décodage de caractéristiques et un suréchantillonnage du mappage de caractéristiques intermédiaire en utilisant un nombre prédéfini de couches de décodage, afin d'obtenir un mappage de caractéristiques suréchantillonné correspondant à chaque couche parmi les couches de décodage, chaque couche de décodage comprenant un module de suréchantillonnage et un module résiduel ;
un module de classification, configuré pour effectuer une synthèse globale sur des cartes de caractéristiques intermédiaires générées par la couche de décodage, et pour effectuer une classification sémantique bidimensionnelle point par point en utilisant des caractéristiques globales ; et
un module de mappage, configuré pour mapper les balises sémantiques bidimensionnelles générées par le module de classification dans un espace tridimensionnel afin de générer une balise sémantique tridimensionnelle ;
un module de sortie, configuré pour synthétiser les étiquettes sémantiques tridimensionnelles point par point délivrées en sortie par le module de mappage en fonction des trames, et pour délivrer en sortie les trames sémantiques tridimensionnelles.

10. Dispositif électronique et support, comprenant : un radar laser, un processeur, un support de stockage amovible, une partie communication, un cluster informatique monté sur un véhicule, une mémoire et un programme informatique stocké dans ladite mémoire ; le radar laser est un radar laser rotatif, et la plage d'angle de champ horizontal est de 360° ; lorsque le processeur exécute le programme, le procédé de segmentation sémantique de nuage de points de radar laser tridimensionnels basé sur l'apprentissage profond, selon l'une quelconque des revendications 1 à 4, est mis en œuvre ; le cluster informatique monté sur un véhicule est un cluster de processeurs graphiques (GPU) pour mettre en œuvre le processus d'apprentissage et de raisonnement selon l'une quelconque des revendications 2 à 4 ;
Le dispositif électronique externe et le support suivants sont connectés à une interface d'entrée/sortie (E/S) : notamment un radar laser à état solide, à état semi-solide ou à rotation mécanique, capable de capturer des informations dans un environnement afin de générer des données de nuage de points d'origine en tant qu'entrée de modèle ultérieure ; une partie communication d'une carte d'interface réseau, telle qu'une carte LAN, un modem, etc., peut effectuer un traitement de communication via un réseau tel qu'Internet ; un support de stockage amovible tel qu'un disque magnétique, un disque optique, un disque magnéto-optique, une mémoire à semi-conducteurs, etc. lit le programme informatique qui y est stocké à partir du port d'E/S selon les besoins ou y écrit une trame de données de résultat de segmentation sémantique à conserver ;
les dispositifs électroniques internes et supports suivants comprennent : une unité centrale de traitement (CPU), capable d'exécuter diverses instructions et actions conformément à un programme stocké dans une mémoire morte (ROM) et chargé dans une mémoire vive (RAM) ; dans la RAM, divers programmes et données nécessaires au fonctionnement du dispositif sont également stockés ; le cluster informatique embarqué dans un véhicule est chargé de recevoir les instructions de la CPU et des données de la ROM, et d'effectuer des calculs parallèles de données à grande échelle ; en particulier, le cluster de processeurs graphiques (GPU) embarqué dans un véhicule est connecté par le biais d'un bus interne à haut débit (PCI-E) ; et la CPU, le cluster informatique embarqué dans un véhicule, la ROM et la RAM sont connectés entre eux par un bus. L'interface d'E/S est également connectée au bus.

11. Support de stockage selon la revendication 10, dans lequel le support de stockage peut être un support de stockage intégré à l'appareil selon la revendication 10, ou peut exister de manière autonome, et n'est pas intégré dans un support de stockage dans le dispositif. Le support de stockage stocke un ou plusieurs programmes, et le programme susmentionné est utilisé par un ou plusieurs processeurs pour mettre en œuvre le procédé de segmentation sémantique de nuage de points de radar laser tridimensionnel basé sur l'apprentissage profond décrit dans la présente divulgation ; y compris des supports permanents ou non permanents, amovibles ou non amovibles, pouvant mettre en œuvre le stockage d'informations par n'importe quel procédé ou n'importe quelle technologie. Les informations peuvent prendre la forme d'instructions informatiques, de modules de programme, de données brutes, de données de résultats ou d'autres types de données. Les exemples de supports de stockage informatique comportent, sans s'y limiter, la mémoire à changement de phase (PRAM), la mémoire vive statique (SRAM), la mémoire vive dynamique (DRAM), d'autres types de mémoire vive (RAM), la mémoire morte (ROM), la mémoire morte programmable et effaçable électriquement (EEPROM), la mémoire flash ou toute autre technologie de mémoire, ainsi que tout autre support de stockage optique ou magnétique, ou tout autre support pouvant être utilisé pour stocker des informations accessibles par un dispositif informatique.
